# EUROPEAN PATENT SPECIFICATION

(11) **EP 2 460 941 B1**
(45) Date of publication and mention of the grant of the patent: **09.01.2019**
(21) Application number: 10804100.5
(22) Date of filing: 26.07.2010
(51) Int. Cl.: B60L 1/00, B60L 15/20, B60L 11/18, B60L 7/14, B66C 23/84, H02K 7/116, E02F 9/20, E02F 9/22, E02F 9/12, H02K 16/00

(54) **SWING DRIVE DEVICE**
SCHWUNGANTRIEBSVORRICHTUNG
DISPOSITIF D'ENTRAÎNEMENT EN OSCILLATION

(30) Priority: 30.07.2009 JP 2009178349
(43) Date of publication of application: 06.06.2012
(73) Proprietor: Takeuchi MFG. Co., Ltd., Nagano 389-0605 (JP)
(72) Inventor: KUMEUCHI, Kengo, Hanishina-gun Nagano 389-0605 (JP); SHIMADA, Yoshihide, Hanishina-gun Nagano 389-0605 (JP); YAMADA, Hiroyuki, Hanishina-gun Nagano 389-0605 (JP)
(74) Representative: Patentwerk B.V.
(86) International application number: PCT/JP2010/004751
(87) International publication number: WO 2011/013347

(56) References cited:
- EP-A1- 1 010 820
- WO-A1-2008/149502
- JP-A- H10 331 197
- JP-A- 2004 360 216
- JP-A- 2005 290 882
- JP-A- 2005 290 882
- JP-A- 2008 297 754
- US-A- 4 449 364

## Description

### TECHNICAL FIELD

The present invention relates to a revolving drive device for revolvably supporting a revolving body on a travel frame and causing the revolving body to revolve, and in particular relates to a revolving drive device applied in a construction machine.

### TECHNICAL BACKGROUND

In conventional power shovels and other construction machines, there are often used revolving drive devices comprising a hydraulic pump driven by an engine and a hydraulic motor driven by the pressure oil from the hydraulic pump, and configured so that a revolving body is made to revolve relatively with respect to a traveling body by the driving of the hydraulic motor. However, a hydraulic actuator (hydraulic pump, hydraulic motor) has poorer energy efficiency (greater energy loss) than an electric actuator. In view whereof, there has been proposed a revolving drive device in which an electric motor and a hydraulic motor are coaxially coupled, and the hydraulic motor and electric motor are used together according to the actions and objectives of the construction machine (see Patent Document 1 and Patent Document 2, for example). There has also been proposed a revolving drive device comprising an electric generator which generates electricity (recovers energy) using the inertial force of the revolving body when it stops revolving (see, e.g., Patent Document 3).

### PRIOR ARTS LIST

### PATENT DOCUMENT

Patent Document 1: Japanese Laid-Open Patent Publication No. 2008-297754(A)
Patent Document 2: Japanese Laid-Open Patent Publication No. 2004-360216(A)
Patent Document 3: Japanese Laid-Open Patent Publication No. 2007-247374(A)
Further, JP H10 331197 A discloses a construction machine with a revolving drive device.

### SUMMARY OF THE INVENTION

### PROBLEMS TO BE SOLVED BY THE INVENTION

However, a problem has been presented in regard to coaxially coupling the hydraulic motor and the electric motor as described above, in that the coupled motors are larger than a single motor, and are not suitable for being mounted in a small construction machine having limited installation space. Since it is difficult to mount a high-capacity battery in a small construction machine, there is demand for a revolving drive device which can efficiently use the electric power of the battery. Furthermore, in a small construction machine, since the inertial force of the revolving body is comparatively small when the revolving body has stopped revolving, there also exists a demand for a revolving drive device which can recover a large amount of energy despite the small inertial force of the revolving body.

The present invention was devised in view of such problems, it being an object thereof to provide a revolving drive device which can optimize the torque distribution of a hydraulic revolution motor and a revolving electric motor to efficiently use battery electric power, and which can be applied in a small construction machine.

### MEANS TO SOLVE THE PROBLEMS

To achieve the object described above, the revolving drive device according to the present invention (e.g., the revolving drive device 60 in the embodiments) is an device for revolvably supporting a revolving body (e.g., the vehicle body 20 in the embodiments) on a traveling body (e.g., the travel device 10 in the embodiments) and causing the revolving body to revolve, the revolving drive device comprising a revolving bearing for revolvably supporting the revolving body on the traveling body, a first revolving gear member provided to either the traveling body or the revolving body and positioned on the same axis as the revolving bearing, a second revolving gear member provided to whichever of the traveling body or the revolving body has the first revolving gear member provided thereto, the second revolving gear member being positioned on the same axis as the revolving bearing, a hydraulic motor having a first pinion gear that meshes with a gear part of the first revolving gear member, the hydraulic motor being capable of rotatably driving the first pinion gear and rotatably driving the first revolving gear member using hydraulic pressure, and a regenerative electric motor having a second pinion gear that meshes with the second revolving gear member, the regenerative electric motor being capable of rotatably driving the second pinion gear and rotatably driving the second revolving gear member using electric power, and being capable of regenerative electric power generation by the rotational driving of the second pinion gear by the rotation of the second revolving gear member; a first reduction ratio at which rotation is transmitted by the first pinion gear to the first revolving gear member being different from a second reduction ratio at which rotation is transmitted by the second pinion gear to the second revolving gear member.

In the aspect described above, the first reduction ratio is preferably lower than the second reduction ratio. At least one of the rotation from the first pinion gear to the first revolving gear member and the rotation from the second pinion gear to the second revolving gear member may be transmitted via a variable-speed gear train 163.

In the revolving drive device according to the aspect of the present invention described above, preferably, the revolving bearing has an outer ring attached to one of the traveling body and the revolving body, and an inner ring provided to an inner side of the outer ring so as to be able to perform relative rotation via rolling elements, the inner ring being attached to another of the traveling body and the revolving body; the first revolving gear member has a first gear provided as being integrally linked to the inner ring, while the second revolving gear member has a second gear provided as being integrally linked to the inner ring and having a different number of teeth than the first gear; the hydraulic motor is provided to the side provided with the outer ring and the first pinion gear meshes with the first gear; and the regenerative electric motor is provided to the side provided with the outer ring and the second pinion gear meshes with the second gear.

In this case, preferably, either one of the first gear and second gear is configured from an internal gear formed in an inner circumferential surface of the inner ring, and another of the first gear and second gear is configured from an internal gear formed in an inner circumferential surface of a ring-shaped member integrally linked to the inner ring.

Preferably, the first revolving gear member and the second revolving gear member are formed integrally having the same number of teeth, and the first pinion gear and the second pinion gear are made to have different numbers of teeth, thereby causing the first and second reduction ratios to be different. In this case, the first revolving gear member and the second revolving gear member may be configured from an internal gear formed in the inner circumferential surface of the inner ring.

In the revolving drive device according to the present invention of the above-described configuration, preferably, the revolving bearing has an outer ring attached to one of the traveling body and the revolving body, and an inner ring provided to an inner side of the outer ring so as to be able to perform relative rotation via rolling elements, the inner ring being attached to another of the traveling body and the revolving body; the first revolving gear member has a first gear provided as being integrally linked to the inner ring, while the second revolving gear member has a second gear provided as being integrally linked to the outer ring and having a different number of teeth than the first gear; the hydraulic motor is provided to the side provided with the outer ring and the first pinion gear meshes with the first gear; and the regenerative electric motor is provided to the side provided with the inner ring and the second pinion gear meshes with the second gear.

In this case, preferably, the first gear is configured from an internal gear formed in an inner circumferential surface of the inner ring, and the second gear is configured from an external gear formed in an outer circumferential surface of the outer ring.

In the revolving drive device according to the aspect of the present invention described above, preferably, the revolving bearing has an outer ring attached to one of the traveling body and the revolving body, and an inner ring provided to an inner side of the outer ring so as to be able to perform relative rotation via rolling elements, the inner ring being attached to another of the traveling body and the revolving body; the first revolving gear member has a first gear provided as being integrally linked to the outer ring, while the second revolving gear member has a second gear provided as being integrally linked to the inner ring and having a different number of teeth than the first gear; the hydraulic motor is provided to the side provided with the inner ring and the first pinion gear meshes with the first gear; and the regenerative electric motor is provided to the side provided with the outer ring and the second pinion gear meshes with the second gear.

In this case, preferably, the first gear is configured from an external gear formed in an outer circumferential surface of the outer ring, and the second gear is configured from an internal gear formed in an inner circumferential surface of the inner ring.

In the revolving drive device according to the aspect of the present invention described above, preferably, the revolving bearing has an outer ring attached to one of the traveling body and the revolving body, and an inner ring provided to an inner side of the outer ring so as to be able to perform relative rotation via rolling elements, the inner ring being attached to another of the traveling body and the revolving body; the first revolving gear member has a first gear provided as being integrally linked to the outer ring, while the second revolving gear member has a second gear provided as being integrally linked to the outer ring and having a different number of teeth than the first gear; the hydraulic motor is provided to the side provided with the inner ring and the first pinion gear meshes with the first gear; and the regenerative electric motor is provided to the side provided with the inner ring and the second pinion gear meshes with the second gear.

In this case, preferably, either one of the first gear or second gear is configured from an external gear formed in an outer circumferential surface of the outer ring, and another one of the first gear or second gear is configured from an external gear formed in an outer circumferential surface of a ring-shaped member integrally linked to the outer ring.

Preferably, the first revolving gear member and the second revolving gear member are formed integrally having the same number of teeth, and the first pinion gear and the second pinion gear are made to have different numbers of teeth, thereby causing the first and second reduction ratios to be different. In this case, the first revolving gear member and the second revolving gear member may be configured from an external gear formed in the outer circumferential surface of the outer ring.

The revolving drive device according to the aspect of the present invention described above preferably comprises a controller for controlling operating oil supplied to the hydraulic revolution motor and electric power supplied to the electric revolution motor and for performing drive control on the hydraulic revolution motor and the electric revolution motor, wherein the controller drives both the hydraulic revolution motor and the electric revolution motor according to the load applied to the hydraulic revolution motor.

Preferably, when the controller drives both the hydraulic revolution motor and the electric revolution motor to accelerate revolution, the controller performs a control for increasing the operating oil supplied to the hydraulic revolution motor and reduces the electric power supplied to the electric revolution motor, and when a predetermined revolving rate is reached, the controller stops the supply of electric power to the electric revolution motor and drives only the hydraulic revolution motor.

### ADVANTAGEOUS EFFECTS OF THE INVENTION

With the revolving drive device according to the present invention configured as described above, the first revolving gear member is provided to either one of the traveling body or the revolving body, the second revolving gear member is provided to the other, the first pinion gear of the hydraulic motor meshes with and drives the first revolving gear member, the second pinion gear of the regenerative electric motor meshes with and drives the second revolving gear member, and the second pinion gear is rotatably driven by the rotation of the second revolving gear member to regenerate electric power; furthermore, the first reduction ratio, at which rotation is transmitted to the first revolving gear member by the first pinion gear, is different from the second reduction ratio, at which rotation is transmitted to the second revolving gear member by the second pinion gear. The first and second reduction ratios can thereby be set and varied as desired, the torque distribution of the hydraulic motor and regenerative electric motor can be optimized (both motors can be actuated with efficient rotational speeds), and the electric power of the battery can be used effectively. The optimum revolution motor can be selected and used, space can be conserved in the locations where the motors are installed, and the revolving drive device according to the present invention can be applied to a small construction machine as well.

In the revolving drive device according to the present invention described above, the hydraulic motor and the regenerative electric motor are preferably controlled so as to both be driven according to the load applied to the hydraulic motor. Specifically, when a load of a predetermined value or greater is applied to the hydraulic motor (e.g., when revolving starts), the regenerative electric motor is driven together with the hydraulic motor. The regenerative electric motor thereby assists the hydraulic motor in revolvably driving the revolving body, less drive horsepower is therefore required of the hydraulic motor, and the hydraulic motor can therefore be made smaller. When the load applied to the hydraulic motor is lower than the aforementioned predetermined value (e.g., when revolving is decelerated (stopped)), the regenerative electric motor operates as an electrical power generator. Therefore, the battery can be intermittently recharged while the revolving body is being revolved, and the power consumption during revolution-driving can accordingly be minimized. Furthermore, when revolving is accelerated, control is preferably performed which increases the supply of operating oil to the hydraulic motor and reduces the supply of electric power to the regenerative electric motor, and when a predetermined revolving speed is reached, control is preferably performed so that the supply of electric power to the regenerative electric motor is stopped and only the hydraulic motor is driven. Energy can thereby be conserved in the pump motor which drives the hydraulic pump for supplying operating oil to the hydraulic motor.

### BRIEF DESCRIPTION OF THE DRAWINGS

Fig. 1 is a drawing showing the configuration of the revolving drive device according to the first embodiment of the present invention;
Fig. 2 is a side view of a small hydraulic shovel shown as an example of a construction machine in which the revolving drive device according to the present invention is applied;
Fig. 3 is a block diagram of the hydraulic unit and power source system of the small hydraulic shovel;
Fig. 4A-B represents drawings showing a revolving bearing constituting the revolving drive device, wherein Fig. 4A is a plan view of the revolving bearing and Fig. 4B is a cross-sectional view of the section indicated by the arrows B-B in Fig. 4A;
Fig. 5 is a drawing showing the configuration of the revolving drive device according to the second embodiment of the present invention;
Fig. 6 is a drawing showing the configuration of the revolving drive device according to the third embodiment of the present invention;
Fig. 7 is a drawing showing the configuration of the revolving drive device according to the fourth embodiment of the present invention; and
Fig. 8A is a drawing showing the configuration of the revolving drive device according to the fifth embodiment of the present invention, and Fig. 8B is a plan view of the revolving bearing and ring-shaped member constituting this revolving drive device.

### DESCRIPTION OF THE EMBODIMENTS

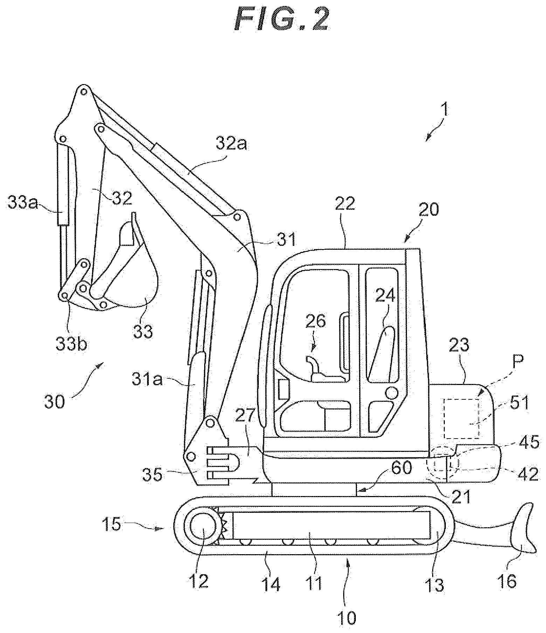

Preferred embodiments of the present invention are described hereinbelow with reference to the drawings. A small hydraulic shovel (hereinbelow referred to as a mini shovel) is first described with reference to Fig. 2 as an example of a construction machine having the revolving drive device according to the present invention. The mini shovel 1 is configured having a travel device 10 comprising a pair of left and right crawler travel mechanisms 15, a vehicle body 20 provided on the travel device 10 so as to be capable of revolving horizontally, and a power shovel mechanism 30 attached to the front of the vehicle body 20 so as to be capable of revolving horizontally (swiveling horizontally).

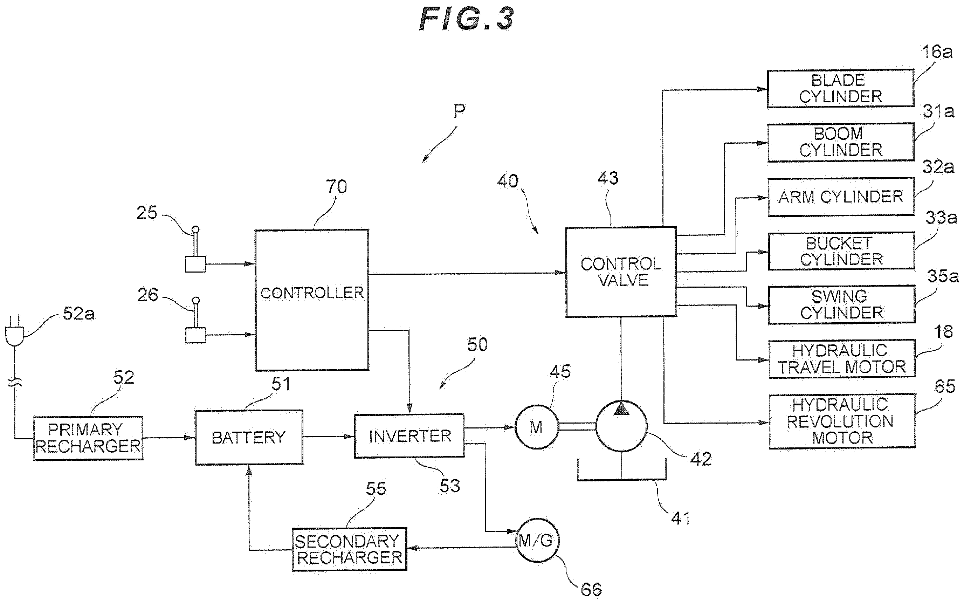

The travel device 10 is configured by providing the crawler travel mechanisms 15, each of which being configured from a crawler track 14 wound over a drive sprocket 12 and a driven sprocket 13, to the left and right of a travel frame 11. Each of the drive sprockets 12 is rotatably driven by a hydraulic travel motor 18 (see Fig. 3). In the rear of the travel frame 11, a blade 16 for performing spreading and grading work and the like is provided to be capable of swiveling vertically, and a blade cylinder (hydraulic cylinder) 16a (see Fig. 3) which causes the blade 16 to swivel vertically is provided connecting the travel frame 11 and the blade 16 together. The revolving drive device 60, described hereinafter, is provided in the center top part of the travel frame 11, and the vehicle body 20 can be caused to revolve horizontally by the revolving drive device 60.

The vehicle body 20 is configured including a driver cabin 22 which forms a riding space for an operator above a vehicle body frame 21 supported to be capable of revolving horizontally by the revolving drive device 60; a motive power device P composed of a hydraulic unit, a power source system, and other components; and a device cover 23 which covers the motive power device P. The interior of the driver cabin 22 includes components such as a seat 24 for the operator to sit, a travel operation lever 25 (see Fig. 3) for operating the actions of the crawler travel mechanisms 15, and a work operation lever 26 for operating the actions of the power shovel mechanism 30 and the revolving drive device 60. A main-body-side pivotally connected part 27 which protrudes forward is formed in the front end of the vehicle body frame 21, and the power shovel mechanism 30 is attached via the main-body-side pivotally connected part 27.

The power shovel mechanism 30 is configured having a swing-side pivotally connected part 35 which is pivotally connected to the main-body-side pivotally connected part 27 so as to be free to revolve or swivel horizontally, a boom 31 pivotally connected to the swing-side pivotally connected part 35 so as to be capable of swiveling up and down within a vertical plane, an arm 32 pivotally connected to the distal end of the boom 31 so as to be capable of swiveling up and down within the same vertical plane, and a bucket 33 pivotally connected to the distal end of the arm 32 so as to be capable of swiveling up and down within the same vertical plane. Furthermore, a boom cylinder 31a which swivels the boom 31 up and down is provided connecting the swing-side pivotally connected part 35 and the boom 31, an arm cylinder 32a which swivels the arm 32 up and down is provided connecting the boom 31 and the arm 32, and a bucket cylinder 33a and link 33b which swivel the bucket 33 up and down are provided connecting the arm 32 and the bucket 33 as illustrated. A swing cylinder 35a (see Fig. 3) which causes the swing-side pivotally connected part 35 to revolve horizontally is provided connecting the vehicle body frame 21 and the swing-side pivotally connected part 35. All of the above-described cylinders are configured from hydraulic cylinders.

The motive power device P is configured having a hydraulic unit 40 for supplying operating oil to the hydraulic actuators (hydraulic motors or hydraulic cylinders) of the different mechanisms, and a power source system 50 for supplying electric power to a pump electric motor 45 constituting the hydraulic unit 40, as shown in Fig. 3. The hydraulic unit 40 is configured having a tank 41 for storing operating oil, a hydraulic pump 42 for discharging operating oil with a predetermined oil pressure and flow rate, a control valve 43 which controls the supply of operating oil discharged from the hydraulic pump 42 to the hydraulic actuators with a supply direction and supply rate corresponding to the operations of the operation levers 25, 26, and the pump electric motor 45 which drives the hydraulic pump 42. Operation signals outputted from the operation levers 25, 26 are inputted to a controller 70, described hereinafter, and the controller 70 outputs to the control valve 43 command signals corresponding to the operation signals to control the actions of the control valve 43.

Specifically, the control valve 43 comprises a plurality of control valves which, based on the operation signals inputted from the operation levers 25, 26 (the command signals inputted from the controller 70), control the supply of pressure oil to the blade cylinder 16a, the boom cylinder 31a, the arm cylinder 32a, the bucket cylinder 33a, the swing cylinder 35a, the hydraulic travel motor 18, or a hydraulic revolution motor 65, described hereinafter. The pump electric motor 45 is configured from an IPM motor (a permanent magnet synchronous motor), for example, or another alternating-current motor, and is driven by electric power supplied from the power source system 50.

The power source system 50 is configured having a battery 51 composed of a lithium ion battery or another secondary battery, a primary recharger 52 for receiving AC electric power from a commercial power source to recharge the battery 51, an inverter 53 for supplying electric power from the battery 51 to the pump electric motor 45 and a revolving electric motor 66, described hereinafter, and a secondary recharger 55 for receiving a supply of electric power generated from the revolving electric motor 66 to recharge the battery 51.

The battery 51 functions as a power source of the pump electric motor 45 and the revolving electric motor 66, and the battery is designed with a high-rated voltage and a high capacity. The primary recharger 52 has an electric plug 52a which can be connected to a commercial power source, and also includes a charge control part which converts the AC electric power supplied from the commercial power source through the connection with the electric plug 52a to DC electric power and controls the output voltage so that the battery 51 can be recharged.

The inverter 53 is configured so as to convert the DC electric power from the battery 51 to AC electric power having a predetermined voltage and frequency and to supply this AC electric power to the pump electric motor 45, thereby controlling the output torque of the pump electric motor 45 and causing a predetermined oil pressure to be discharged from the hydraulic pump 42. The inverter 53 is also configured so as to control the output torque of the revolving electric motor 66 by supplying the converted AC electric power to the revolving electric motor 66. The secondary recharger 55 is configured to perform control for recharging the battery 51 with the electric power generated from the revolving electric motor 66, whereby the battery 51 is recharged intermittently when a brake is applied to the revolving of the vehicle body 20.

In this mini shovel 1, the supplied operating oil is used to drive the hydraulic actuators by controlling the control valve 43 and the inverter 53, and these controls are performed by the controller 70. The controller 70 receives the input of operation signals from the operation levers 25, 26 corresponding to the operated directions and amounts of the operating levers, and outputs command signals to the control valve 43 corresponding to the operating signals to control the actions of the hydraulic actuators. At this time, in order for the operating oil needed for these actions to be supplied from the hydraulic pump 42, the controller 70 issues a command to the inverter 53 for the rotational speed and applied voltage of the pump electric motor 45, and the inverter 53 supplies the pump electric motor 45 with AC electric power based on the command value to control the actions.

When the controller 70 supplies operating oil to the hydraulic actuators to drive the mini shovel 1, the pump electric motor 45 is caused to rotate at a high speed to supply operating oil from the hydraulic pump 42. Conversely, when the hydraulic actuators have stopped, the controller 70 minimizes power consumption of the battery 51 by causing the pump electric motor 45 to rotate at a low speed.

In the mini shovel 1 configured as described above, when the operator riding in the driver cabin 22 operates the travel operation lever 25, an action control of the control valve 43 is performed by the controller 70 based on an operating signal thereof, and control is performed for supplying the hydraulic travel motor 18 with pressure oil from the hydraulic pump 42. The left and right crawler travel mechanisms 15 can thereby be driven according to the operations of the operator to control the travel of the mini shovel 1. At this time, control is performed for supplying electric power from the battery 51 to the pump electric motor 45 by the inverter 53 according to the operations, the hydraulic pump 42 is driven by the pump electric motor 45, and pressure oil is supplied to the control valve 43.

When the work operation lever 26 is operated, an action control of the control valve 43 is performed by the controller 70 based on an operating signal thereof, and control is performed for supplying pressure oil from the hydraulic pump 42 to the swing cylinder 35a, the boom cylinder 31a, the arm cylinder 32a, and the bucket cylinder 33a. Excavating work can thereby be performed by controlling the action of horizontally revolving the entire power shovel mechanism 30 to the left and right relative to the vehicle body 20, the action of swiveling the boom 31 up and down relative to the swing-side pivotally connected part 35, the action of swiveling the arm 32 up and down relative to the boom 31, and the action of swiveling the bucket 33 up and down relative to the arm 32, according to the operations of the operator. The pressure oil fed from the hydraulic pump 42 is supplied to the blade cylinder 16a and the hydraulic revolution motor 65 as well, and the action of swiveling the blade 16 and down can be performed according to the operations of the operator, as can control for causing the vehicle body 20 to revolve horizontally using the revolving drive device 60. Control is performed at this time as well for supplying electric power from the battery 51 to the pump electric motor 45 by the inverter 53 according to the operations, the hydraulic pump 42 is driven by the pump electric motor 45, and pressure oil is supplied to the control valve 43.

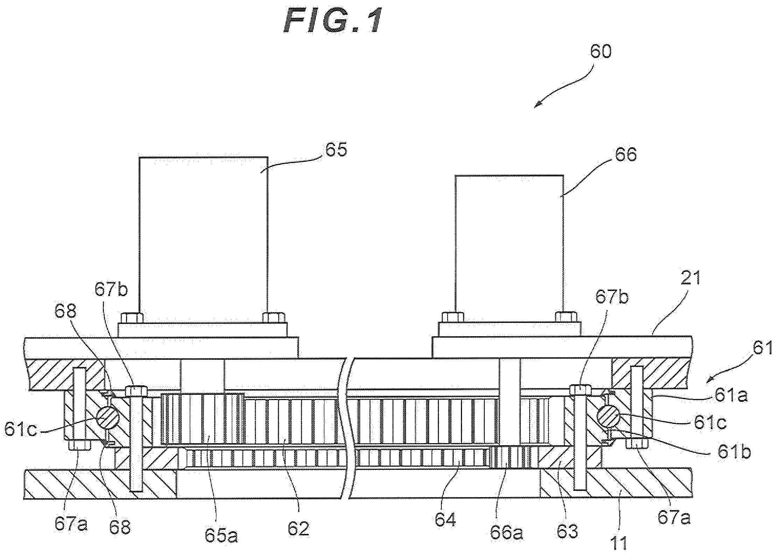

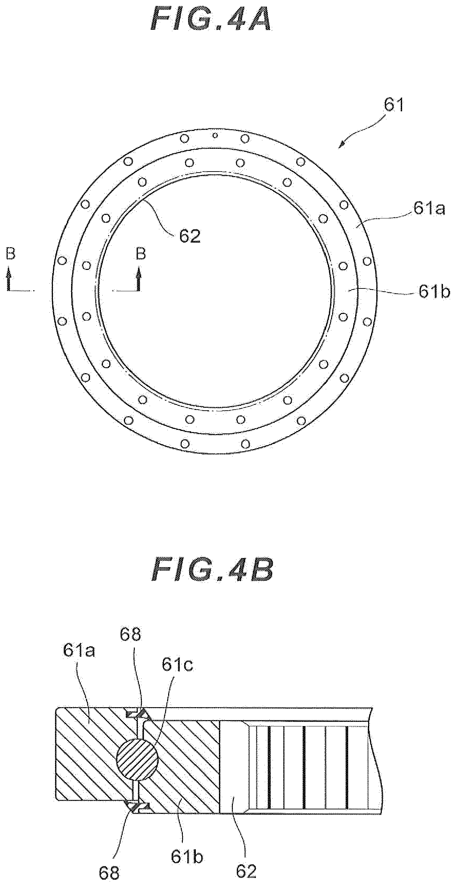

Next, Figs. 1 and 4 are used to give a detailed description of the revolving drive device 60 according to the first embodiment of the present invention. The revolving drive device 60 is configured having a revolving bearing 61 for supporting the vehicle body frame 21 to be capable of revolving horizontally relative to the travel frame 11, a ring-shaped member 63 installed between the travel frame 11 and the revolving bearing 61, and a hydraulic revolution motor 65 and electric revolution motor 66 for providing revolving-drive force to the vehicle body frame 21. The hydraulic revolution motor 65 is equivalent to the hydraulic motor of the present invention, and the electric revolution motor 66 is equivalent to the regenerative electric motor of the present invention.

The revolving bearing 61 is composed of an outer ring 61a and an inner ring 61b which are metal ring-shaped members, wherein the inner ring 61b is fitted into the outer ring 61a and a plurality of balls (rolling elements) 61c are held between the outer ring 61a and the inner ring 61b, enabling the outer ring 61a and the inner ring 61b to rotate relative to each other. The outer ring 61a is attached to the bottom surface of the vehicle body frame 21 by a plurality of bolts 67a, and the inner ring 61b is attached to the top surface of the travel frame 11 via the ring-shaped member 63 by a plurality of bolts 67b. A first internal gear 62 is formed integrally on the inner circumferential surface of the inner ring 61b and positioned along the same axis as the revolving bearing 61, and the first internal gear 62 receives revolving-drive force from the hydraulic revolution motor 65. It is by design that tiny ring-shaped gaps form vertically between the outer ring 61a and the inner ring 61b, but to prevent water and impurities from entering through these gaps, ring-shaped seal members 68, 68 for covering all the vertical gaps are provided in the outer ring 61a or the inner ring 61b.

The ring-shaped member 63 is configured from a metal member of substantially the same diameter as the inner ring 61b of the revolving bearing 61, and while sandwiched between the travel frame 11, and the inner ring 61b, is attached with the inner ring 61b to the top surface of the travel frame 11 by the plurality of bolts 67b. A second internal gear 64 is formed integrally on the inner circumferential surface of the ring-shaped member 63 and positioned along the same axis as the revolving bearing 61, and the second internal gear 64 receives revolving-drive force from the electric revolution motor 66. The number of teeth i_{G2} of the second internal gear 64 and the number of teeth i_{G1} of the first internal gear 62 formed on the inner ring 61b can be designed as desired, and the number of teeth i_{G2} of the second internal gear 64 is greater than the number of teeth i_{G1} of the first internal gear 62 in this case (i_{G2} > i_{G1}).

The hydraulic revolution motor 65 is configured so as to be driven by pressure oil supplied from the hydraulic pump 42 via the control valve 43 as described above, and is attached to the vehicle body frame 21. The drive shaft of the hydraulic revolution motor 65 extends into the inner ring 61b of the revolving bearing 61, and a first pinion 65a which meshes with the first internal gear 62 of the inner ring 61b is attached to the drive shaft. When the first pinion 65a is caused to rotate by the driving of the hydraulic revolution motor 65, the rotational drive force thereof is transmitted to the vehicle body frame 21 via the first internal gear 62 meshed with the pinion. The first pinion 65a has a number of teeth i_{P1}, and a first reduction ratio r1 at which rotation is transmitted from the first pinion 65a to the first internal gear 62 is r1 = i_{G1}/i_{P1}.

The electric revolution motor 66, which is driven by receiving electric power from the battery 51 via the inverter 53, is a motor generator which functions as an electrical power generator when being driven and supplies the generated electric power to the battery 51 via the secondary recharger 55 to recharge the battery (see Fig. 3 also), and is also attached to the vehicle body frame 21 similar to the hydraulic revolution motor 65. The drive shaft of the electric revolution motor 66 extends through the revolving bearing 61 (the inner ring 61b) into the ring-shaped member 63, and a second pinion 66a which meshes with the second internal gear 64 of the ring-shaped member 63 is attached to the drive shaft. When the second pinion 66a is caused to rotate by the driving of the electric revolution motor 66, the rotational drive force is transmitted to the vehicle body frame 21 via the second internal gear 64 meshed with the pinion. The second pinion 66a has a number of teeth i_{P2}, and a second reduction ratio r2 at which rotation is transmitted from the second pinion 66a to the second internal gear 64 is r2 = i_{G2}/i_{P2}. The number of teeth i_{P2} of the second pinion 66a is lower than the number of teeth i_{P1} of the first pinion 65a attached to the hydraulic revolution motor 65. Therefore, the first reduction ratio r1 is lower than the second reduction ratio r2.

In the revolving drive device 60 configured as described above, the control valve 43 and the inverter 53 are controlled by the controller 70, whereby supplied operating oil and electric power are used to drive the hydraulic revolution motor 65 and the electric revolution motor 66 and horizontally revolve the vehicle body 20. The control of the hydraulic revolution motor 65 and electric revolution motor 66 by the controller 70 is described referring also to Fig. 3.

Upon receiving the input of an operating signal (hereinbelow referred to as a revolution signal) from the work operation lever 26 indicating that the vehicle body 20 is to be caused to revolve, the controller 70 controls the control valve 43 and the inverter 53 according to the revolution signal to drive the hydraulic revolution motor 65. Specifically, when the revolution signal indicates an increase to accelerate revolution, the controller 70 increases the opening degree of the control valve 43, accelerates the rotational speed of the pump electric motor 45, and increases the amount of operating oil supplied to the hydraulic revolution motor 65. When the revolution signal indicates a reduction to decelerate revolution (e.g., when revolving is to be stopped), the controller 70 reduces the opening degree of the control valve 43, decelerates the rotational speed of the pump electric motor 45, and reduces the amount of operating oil supplied to the hydraulic revolution motor 65. Thus, when the hydraulic revolution motor 65 is driven, the first pinion 65a rotates, and the reactive force generated from the meshing between the first pinion 65a and the first internal gear 62 is transmitted to the vehicle body 20 (the vehicle body frame 21) via the hydraulic revolution motor 65; therefore, the vehicle body 20 can be caused to revolve horizontally relative to the travel device 10 (the travel frame 11).

When revolving (the revolving rate) is accelerated, and particularly when revolving is initiated from a stopped state (when revolving starts), the load acting on the hydraulic revolution motor 65 increases. In view whereof, in the present embodiment, the hydraulic revolution motor 65 and the electric revolution motor 66 are both driven according to the load acting on the hydraulic revolution motor 65, and the electric revolution motor 66 assists the hydraulic revolution motor 65 in causing the vehicle body 20 to revolve horizontally. Specifically, when the amount of increase in the revolution signal is greater than a predetermined value (or equal to the predetermined value) (e.g., when revolving starts), the controller 70 causes the hydraulic revolution motor 65 to be driven as described above and supplies electric power from the battery 51 to the electric revolution motor 66 via the inverter 53 to cause the electric revolution motor 66 to be driven. When the electric revolution motor 66 is driven in this manner, the second pinion 66a rotates, and the reactive force generated from the meshing between the second pinion 66a and the second internal gear 64 is transmitted to the vehicle body 20 (the vehicle body frame 21) via the electric revolution motor 66. The electric revolution motor 66 thereby assists the hydraulic revolution motor 65 in causing the vehicle body 20 to revolve horizontally. At this time, the rotational speed of the pump electric motor 45 is accelerated to increase the amount of operating oil supplied to the hydraulic revolution motor 65 while the output torque of the electric revolution motor 66 is reduced, and when the target revolving rate is achieved, the revolving is driven by the hydraulic revolution motor 65 alone. By controlling the rotational speed of the pump electric motor 45 in this manner, energy can be conserved in the hydraulic pump 42 as well.

When the amount of increase in the revolution signal is less than the predetermined value, the controller 70 does not supply electric power from the battery 51 to the electric revolution motor 66, and drives only the hydraulic revolution motor 65 as described above to cause the vehicle body 20 to revolve horizontally.

When the vehicle body 20 is revolving and the revolution signal is a reduction indicating deceleration of the revolving (e.g., when the revolving is stopped), the controller 70 does not supply electric power from the battery 51 to the electric revolution motor 66, and either drives only the hydraulic revolution motor 65 as described above or stops the supply of operating oil to the hydraulic revolution motor 65 as well and causes the horizontal revolving of the vehicle body 20 to decelerate. At this time, the electric revolution motor 66 functions as an electrical power generator. In other words, in the electric revolution motor 66, the drive shaft is caused to rotate by the meshing of the second internal gear 64 with the second pinion 66a, and the torque applied to the drive shaft is converted to electric energy (energy is regenerated), recharging the battery 51 via the secondary recharger 55 and causing revolving to decelerate.

Thus, when a large load is applied to the hydraulic revolution motor 65 (e.g., when revolving starts), the hydraulic revolution motor 65 and the electric revolution motor 66 are both driven, and the electric revolution motor 66 thereby assists the hydraulic revolution motor 65 in causing the vehicle body 20 to revolve horizontally. Therefore, less drive horsepower is required of the hydraulic revolution motor 65, and the hydraulic revolution motor 65 can be made smaller. When the load applied to the hydraulic revolution motor 65 is comparatively small (e.g., when revolving is decelerated (stopped)), the electric revolution motor 66 functions as an electrical power generator; therefore, the battery 51 can be intermittently recharged during braking on the revolving of the vehicle body 20, and the power consumption during revolution-driving can accordingly be minimized.

The first pinion 65a caused to rotate by the driving of the hydraulic revolution motor 65 meshes with the first internal gear 62 formed in the inner ring 61b, and the second pinion 66a caused to rotate by the riving of the electric revolution motor 66 meshes with the second internal gear 64 formed in the ring-shaped member 63. Thus, since the first pinion 65a and the second pinion 66a mesh with different gears, the first and second reduction ratios r1, r2 can be set as desired by varying the numbers of teeth of the gears. Consequently, it is possible to optimize the torque distribution of the revolution motors 65, 66 (to actuate the revolution motors 65, 66 with efficient rotational speeds and pressures), and the electric power of the battery 51 can be used effectively.

In the present embodiment, since the number of teeth i_{G2} of the second internal gear 64 is set higher than the number of teeth i_{G1} of the first internal gear 62, and the number of teeth i_{P2} of the second pinion 66a is set lower than the number of teeth i_{P1} of the first pinion 65a, so that the first reduction ratio r1 is set lower than the second reduction ratio r2, the rotational speed of the second pinion 66a can be increased when the electric revolution motor 66 operates as an electrical power generator. The drive shaft of the motor 66 can consequently be caused to rotate at high speeds, and energy can therefore be regenerated efficiently in high rotation ranges to recharge the battery 51.

The modification of the first embodiment described above may be configured so that the inner ring 61b is attached to the vehicle body frame 21, the outer ring 61a is attached to the travel frame 11, and the hydraulic revolution motor 65 and electric revolution motor 66 are attached to the travel frame 11. The first pinion of the hydraulic revolution motor may be meshed with the internal gear of the ring-shaped member, and the second pinion of the electric revolution motor may be meshed with the internal gear of the inner ring.

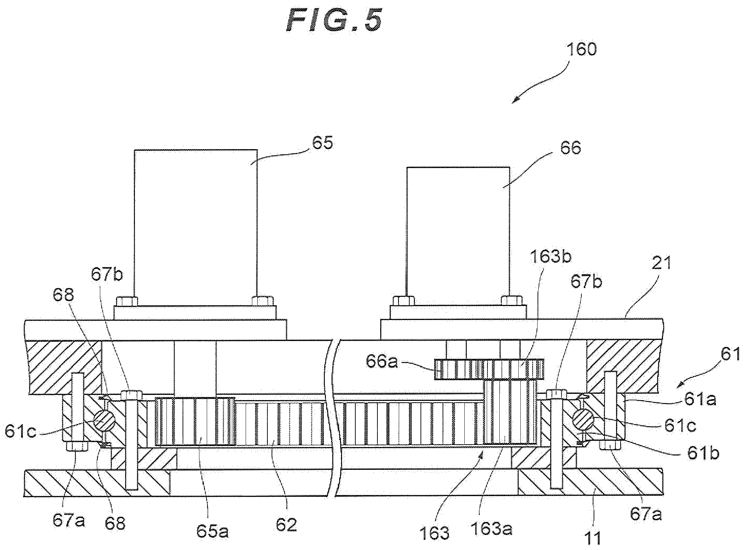

Next, a revolving drive device 160 according to a second embodiment of the present invention will be described with reference to Fig. 5. This revolving drive device 160 is configured so that the first internal gear 62 formed integrally in the inner ring 61b receives revolving-drive force from the electric revolution motor 66 via a variable-speed gear train 163. The first pinion 65a of the hydraulic revolution motor 65 also meshes with the first internal gear 62. Therefore, the first internal gear 62 constitutes first and second revolving gears of the present invention. The configuration is otherwise identical to the configuration of the embodiment described above, and the same components are therefore denoted by the same numerals and are not described.

The variable-speed gear train 163 is composed of a bottom gear 163a which meshes with the first internal gear 62 and a top gear 163b which meshes with the second pinion 66a, the bottom and top gears 163a, 163b are linked integrally on the same axis, and both gears are axially supported on the vehicle body frame 21 so as to rotate integrally. The first pinion 65a of the hydraulic revolution motor 65 may be configured so as to mesh with the first internal gear 62 via an identically configured variable-speed gear train. In other embodiments besides the present embodiment, the first and second pinions of the hydraulic revolution motor and the electric revolution motor may be similarly configured so as to transmit rotation to revolving gears via variable-speed gear trains.

In this revolving drive device 160, similarly with respect to the revolving drive device 60 described above, when a large load is applied to the hydraulic revolution motor 65 (e.g., when revolving starts), the hydraulic revolution motor 65 and the electric revolution motor 66 are both driven, whereby the electric revolution motor 66 assists the hydraulic revolution motor 65 in causing the vehicle body 20 to revolve horizontally, and the hydraulic revolution motor 65 can therefore be made smaller. When the load applied to the hydraulic revolution motor 65 is comparatively small (when revolving is decelerated (stopped)), the electric revolution motor 66 operates as an electrical power generator. Therefore, the battery 51 can be intermittently recharged during braking on the revolving of the vehicle body 20, and power consumption during revolution-driving can accordingly be minimized.

In the revolving drive device 160, since the first internal gear 62 constitutes the first and second revolving gears of the present invention, both gears have the same number of teeth, but the first and second reduction ratios can be set as desired by suitably setting the number of teeth i_{P2} of the second pinion 66a and the number of teeth i_{P1} of the first pinion 65a, and also by setting the reduction ratio of the transmission of rotation from the second pinion 66a to the first internal gear 62 by the variable-speed gear train (this reduction ratio is established by the gear ratio between the second pinion 66a and the top gear 163b and the gear ratio between the bottom gear 163a and the first internal gear). Consequently, the torque distribution of the revolution motors 65, 66 can be optimized (the revolution motors 65, 66 can be actuated with efficient rotational speeds and pressures), and the electric power of the battery 51 can be used effectively. In the present embodiment, the first reduction ratio r1 is set to be lower than the second reduction ratio r2 by setting the number of teeth i_{P2} of the second pinion 66a to be lower than the number of teeth i_{P1} of the first pinion 65a and suitably setting the numbers of teeth of the top and bottom gears 163a, 163b of the variable-speed gear train, and the rotational speed of the second pinion 66a can be increased when the electric revolution motor 66 is operating as an electrical power generator. Consequently, the drive shaft of the motor 66 can be caused to rotate at high speeds, and therefore energy can be regenerated efficiently in high rotation ranges to recharge the battery 51.

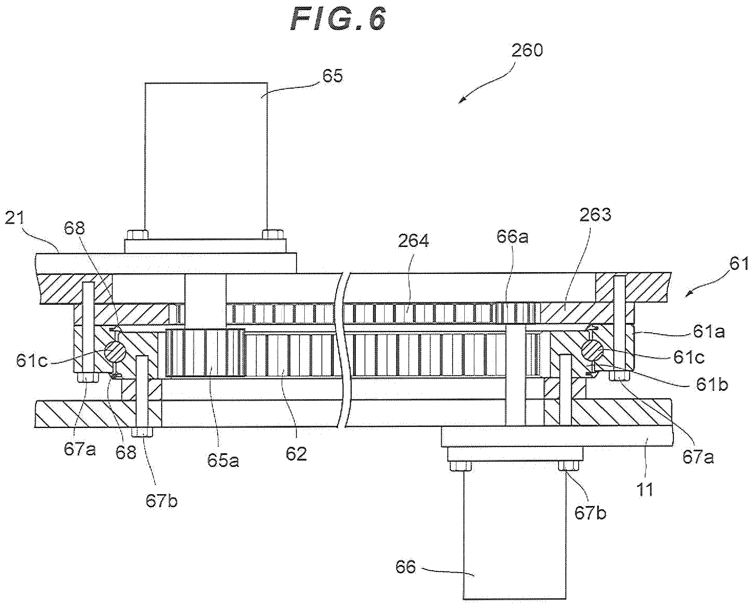

Next, a revolving drive device 260 according to a third embodiment of the present invention will be described with reference to Fig. 6. This revolving drive device 260 is configured so that a second internal gear 264, which is formed integrally in a ring-shaped member 263 provided between the vehicle body frame 21 and the outer ring 61a, receives revolving-drive force from the electric revolution motor 66. Furthermore, the electric revolution motor 66 is attached to the travel frame 11. The configuration is otherwise identical to the configuration of the embodiment described above, and the same components are therefore denoted by the same numerals and are not described.

The ring-shaped member 263, which has substantially the same outside diameter as the outer ring 61a of the revolving bearing 61, is configured from a metal member having substantially the same inside diameter as the inner ring 61b, and is attached together with the outer ring 61a to the bottom surface of the vehicle body frame 21 by a plurality of bolts 67a in a state of being held between the vehicle body frame 21 and the outer ring 61a. The second internal gear 264 is formed integrally in the inner circumferential surface of the ring-shaped member 263 and the second internal gear 264 receives revolving-drive force from the electric revolution motor 66. The number of teeth i_{G2} of the second internal gear 264 and the number of teeth i_{G1} of the first internal gear 62 formed in the inner ring 61b both can be set as desired, but in this case the number of teeth i_{G2} of the second internal gear 264 is set to be more than the number of teeth i_{G1} of the first internal gear 62 (i_{G2} > i_{G1}).

The electric revolution motor 66 is configured from a motor generator as described above, and is attached to the travel frame 11. The drive shaft of the electric revolution motor 66 extends through the revolving bearing 61 (the inner ring 61b) into the ring-shaped member 263, and to this drive shaft is attached the second pinion 66a which meshes with the second internal gear 264 formed in the ring-shaped member 263. When the second pinion 66a is caused to rotate by the driving of the electric revolution motor 66, revolving-drive force from the electric revolution motor 66 is transmitted to the vehicle body frame 21 by the meshing of the second pinion 66a and the second internal gear 264. The vehicle body frame 21 can thereby be caused to revolve horizontally relative to the travel frame 11.

The hydraulic revolution motor 65, similarly with respect to the embodiment described above, is attached to the vehicle body frame 21, and the first pinion 65a which meshes with the first internal gear 62 formed in the inner ring 61b is attached to the drive shaft of the motor. Consequently, the vehicle body 20 (the vehicle body frame 21) can be caused to revolve horizontally relative to the travel device (the travel frame 11) by driving the hydraulic revolution motor 65 to cause the first pinion 65a to rotate.

In the revolving drive device 260 configured in this manner, similarly with respect to the revolving drive device described above, when a large load is applied to the hydraulic revolution motor 65 (e.g., when revolving starts), the hydraulic revolution motor 65 and the electric revolution motor 66 are both driven, whereby the electric revolution motor 66 assists the hydraulic revolution motor 65 in causing the vehicle body 20 to revolve horizontally; therefore, the hydraulic revolution motor 65 can be made smaller. When the load applied to the hydraulic revolution motor 65 is comparatively small (when revolving is decelerated (stopped)), the electric revolution motor 66 operates as an electrical power generator; therefore, the battery 51 can be intermittently recharged during braking on the revolving of the vehicle body 20, and power consumption during revolution-driving can accordingly be minimized.

In the revolving drive device 260, the first and second reduction ratios r1, r2 can be set as desired by varying the numbers of teeth of the first internal gear 62 and second internal gear 264 as well as the numbers of teeth of the first and second pinions 65a, 66a. Consequently, it is possible to optimize the torque distribution of the revolution motors 65, 66 (to actuate the revolution motors 65, 66 with efficient rotational speeds and pressures), and the electric power of the battery 51 can be used effectively.

In the present embodiment, since the number of teeth i_{G2} of the second internal gear 264 is set to be more than the number of teeth i_{G1} of the first internal gear 62, the number of teeth i_{P2} of the second pinion 66a is set to be lower than the number of teeth i_{P1} of the first pinion 65a, and the first reduction ratio r1 is set to be lower than the second reduction ratio r2; the rotational speed of the second pinion 66a can be increased when the electric revolution motor 66 operates as an electrical power generator. The drive shaft of the motor 66 can consequently be caused to rotate at high speeds, and energy can therefore be regenerated efficiently in high rotation ranges to recharge the battery 51. Since the electric revolution motor 66 is attached to the travel frame 11 in the revolving drive device 260, space in the vehicle body frame 21 can be conserved.

A modification of the third embodiment described above may be configured so that the inner ring 61b is attached to the vehicle body frame 21, the outer ring 61a is attached to the travel frame 11, the hydraulic revolution motor 65 is attached to the travel frame 11, and the electric revolution motor 66 is attached to the vehicle body frame 21.

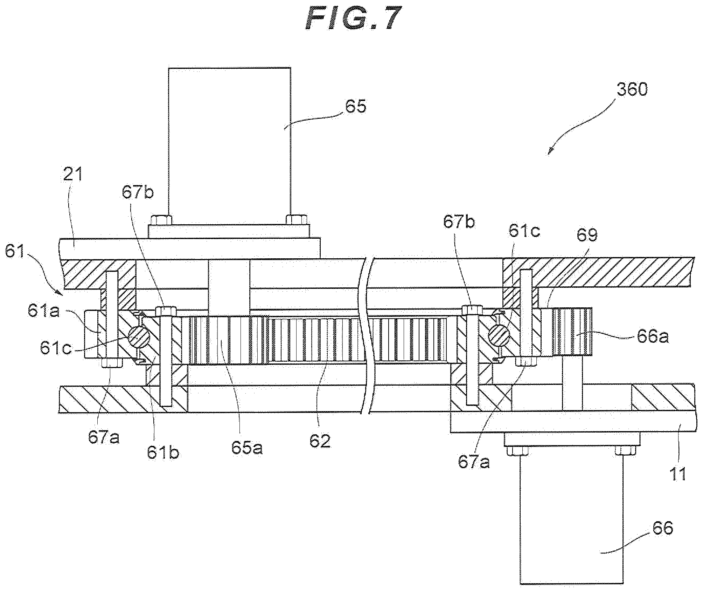

Next, a revolving drive device 360 according to a fourth embodiment of the present invention will be described with reference to Fig. 7. This revolving drive device 360 is configured so that an external gear 69 formed integrally on the outer circumferential surface of the outer ring 61a receives revolving-drive force from the electric revolution motor 66. The electric revolution motor 66 is attached to the travel frame 11. The configuration is otherwise identical to the configuration of the first embodiment described above, and the same components are therefore denoted by the same numerals and are not described.

The revolving bearing 61 is designed so that the external gear 69 is integrally formed on the outer circumferential surface of the outer ring 61a as described above, and the external gear 69 receives revolving-drive force from the electric revolution motor 66. The number of teeth i_{G2} of the external gear 69 and the number of teeth i_{G1} of the first internal gear 62 formed in the inner ring 61b can both be set as desired, and the number of teeth i_{G2} of the external gear 69 is higher than the number of teeth i_{G1} of the first internal gear 62 (i_{G2} > i_{G1}).

The electric revolution motor 66 is configured from a motor generator as described above, and is attached to the travel frame 11. The drive shaft of the electric revolution motor 66 extends through the outer side of the revolving bearing 61, and attached to this drive shaft is the second pinion 66a which meshes with the external gear 69 formed on the outer ring 61a. When the second pinion 66a is caused to rotate by the driving of the electric revolution motor 66, the revolving-drive force of the electric revolution motor 66 is transmitted to the vehicle body frame 21 by the meshing of the second pinion 66a and the external gear 69. The vehicle body frame 21 can thereby be caused to revolve horizontally relative to the travel frame 11.

The hydraulic revolution motor 65 is attached to the vehicle body frame 21, similarly with respect to the embodiments described above, and the first pinion 65a meshed with the first internal gear 62 formed in the inner ring 61b is attached to the drive shaft of the motor. Consequently, the vehicle body frame 21 can be caused to revolve horizontally relative to the travel frame 11 by driving the hydraulic revolution motor 65 to cause the first pinion 65a to rotate.

In the revolving drive device 360 configured in this manner, similarly with respect to the revolving drive device described above, when a large load is applied to the hydraulic revolution motor 65 (e.g., when revolving starts), the hydraulic revolution motor 65 and the electric revolution motor 66 are both driven, whereby the electric revolution motor 66 assists the hydraulic revolution motor 65 in causing the vehicle body 20 to revolve horizontally, and the hydraulic revolution motor 65 can therefore be made smaller. When the load applied to the hydraulic revolution motor 65 is comparatively small (when revolving is decelerated (stopped)), the electric revolution motor 66 operates as an electrical power generator; therefore, the battery 51 can be intermittently recharged during braking on the revolving of the vehicle body 20, and power consumption during revolution-driving can accordingly be minimized.

In the revolving drive device 360, the first and second reduction ratios r1, r2 can be set as desired by varying the numbers of teeth of the first internal gear 62 and external gear 69 as well as the numbers of teeth of the first and second pinions 65a, 66a. Consequently, it is possible to optimize the torque distribution of the revolution motors 65, 66 (to actuate the revolution motors 65, 66 with efficient rotational speeds and pressures), and the electric power of the battery 51 can be used effectively. In this case, since the number of teeth i_{G2} of the external gear 69 is set to be higher than the number of teeth i_{G1} of the first internal gear 62, the number of teeth i_{P2} of the second pinion 66a is set to be lower than the number of teeth i_{P1} of the first pinion 65a, and the first reduction ratio r1 is set to be lower than the second reduction ratio r2; the rotational speed of the second pinion 66a can be increased when the electric revolution motor 66 operates as an electrical power generator. The drive shaft of the motor 66 can consequently be caused to rotate at high speeds, and energy can therefore be regenerated efficiently in high rotation ranges to recharge the battery 51. Since the electric revolution motor 66 is attached to the travel frame 11 in the revolving drive device 360, space in the vehicle body frame 21 can be conserved.

A modification of the fourth embodiment described above may be configured so that the inner ring 61b is attached to the vehicle body frame 21, the outer ring 61a is attached to the travel frame 11, the hydraulic revolution motor 65 is attached to the travel frame 11, and the electric revolution motor 66 is attached to the vehicle body frame 21.

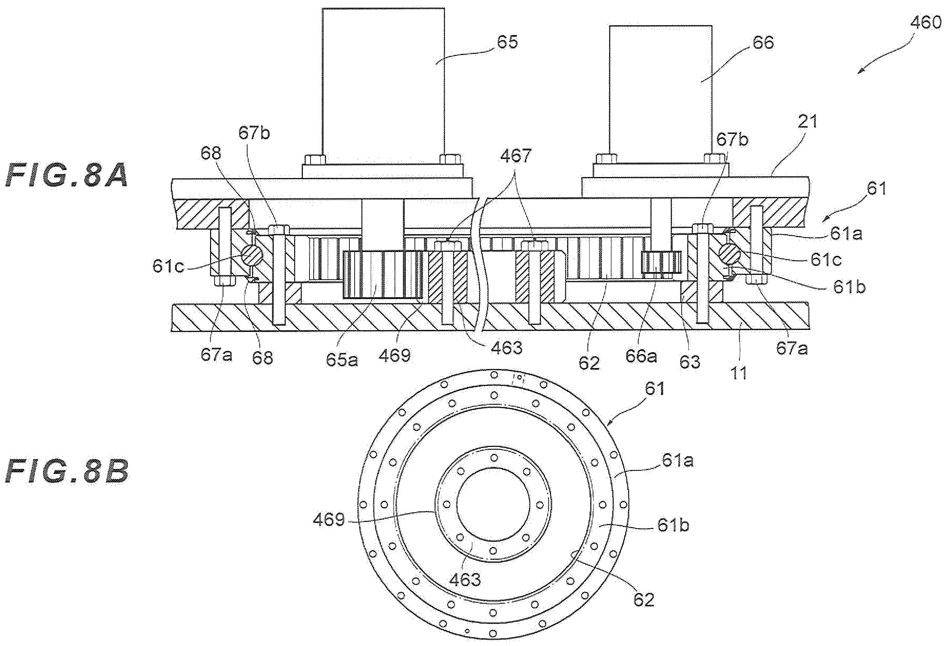

Next, a revolving drive device 460 according to a fifth embodiment of the present invention will be described with reference to Fig. 8. This revolving drive device 460 is configured so that a ring-shaped member 463 is provided to the inner side of the revolving bearing 61 (the inner ring 61b), and as external gear 469 formed integrally in the outer circumferential surface of the ring-shaped member 463 receives revolving-drive force from the hydraulic revolution motor 65. The device is also configured so that the first internal gear 62 formed in the inner ring 61b receives revolving-drive force from the electric revolution motor 66. The configuration is otherwise identical to the configuration of the first embodiment described above, and the same components are therefore denoted by the same numerals and are not described.

The ring-shaped member 463 is configured from a metal member smaller in diameter than the inner ring 61b of the revolving bearing 61, and is attached to the top surface of the travel frame 11 by a plurality of bolts 467 so as to be substantially concentric with the inner ring 61b within the inner side of the inner ring 61b. The external gear 469 is formed integrally in the outer circumferential surface of the ring-shaped member 463, and the external gear 469 receives revolving-drive force from the hydraulic revolution motor 65. The number of teeth i_{G1} of the external gear 469 and the number of teeth i_{G2} of the first internal gear 62 formed in the inner ring 61b can both be set as desired, and in this case, the number of teeth i_{G1} of the external gear 469 is set to be lower than the number of teeth i_{G2} of the first internal gear 62 (i_{G1} > i_{G2}).

The hydraulic revolution motor 65 is attached to the vehicle body frame 21, similarly with respect to the embodiments described above. The drive shaft of the hydraulic revolution motor 65 extends into the revolving bearing 61 (the inner ring 61b), and attached to this drive shaft is the first pinion 65a which meshes with the external gear 469 formed in the ring-shaped member 463. When the first pinion 65a is caused to rotate by the driving of the hydraulic revolution motor 65, revolving-drive force from the hydraulic revolution motor 65 is transmitted to the vehicle body frame 21 by the meshing of the first pinion 65a and the external gear 469. The vehicle body frame 21 can thereby be caused to revolve horizontally relative to the travel frame 11.

The electric revolution motor 66 is attached to the vehicle body frame 21, similarly with respect to the embodiments described above, and the second pinion 66a meshed with the first internal gear 62 formed in the inner ring 61b is attached to the drive shaft of the motor. Consequently, the vehicle body frame 21 can be caused to revolve horizontally relative to the travel frame 11 by driving the electric revolution motor 66 to cause the second pinion 66a to rotate.

In the revolving drive device 460 configured in this manner, similarly with respect to the revolving drive device described above, when a large load is applied to the hydraulic revolution motor 65 (e.g., when revolving starts), the hydraulic revolution motor 65 and the electric revolution motor 66 are both driven, whereby the electric revolution motor 66 assists the hydraulic revolution motor 65 in causing the vehicle body 20 to revolve horizontally, and the hydraulic revolution motor 65 can therefore be made smaller. When the load applied to the hydraulic revolution motor 65 is comparatively small (when revolving is decelerated (stopped)), the electric revolution motor 66 operates as an electrical power generator; therefore, the battery 51 can be intermittently recharged during braking on the revolving of the vehicle body 20, and power consumption during revolution-driving can accordingly be minimized.

In the revolving drive device 460, the rotational speed ratios of the first and second pinions 65a, 66a can be set as desired by varying the numbers of teeth of the first internal gear 62 and external gear 469. Consequently, it is possible to optimize the torque distribution of the revolution motors 65, 66 (to actuate the revolution motors 65, 66 with efficient rotational speeds and pressures), and the electric power of the battery 51 can be used effectively. In this case, since the number of teeth i_{G1} of the external gear 469 is set lower than the number of teeth i_{G2} of the first internal gear 62 and the number of teeth i_{P2} of the second pinion 66a is set lower than the number of teeth i_{P1} of the first pinion 65a, the rotational speed of the second pinion 66a can be increased. The drive shaft of the electric revolution motor 66 can consequently be caused to rotate at high speeds when the motor 66 operates as an electrical power generator, and more energy can therefore be regenerated to recharge the battery 51. The revolving drive device 460 can be configured so that the first pinion 65a meshes with the external gear 469 and the second pinion 66a meshes with the first internal gear 62 within the space enclosed by the inner ring 61b, the ring-shaped member 463, and the travel frame 11; and this space can therefore be charged with grease (a lubricant) in advance.

In the revolving drive devices 60, 160, 460 in the embodiments described above, the outer ring 61a, the hydraulic revolution motor 65, and the electric revolution motor 66 are provided to the vehicle body frame 21, but the outer ring 61a, the hydraulic revolution motor 65, and the electric revolution motor 66 may also be provided to the travel frame 11. In this case, the inner ring 61b would be attached to the vehicle body frame 21. In the revolving drive device 460, the ring-shaped member 463 would also be attached to the vehicle body frame 21.

In the revolving drive devices 260, 360, the hydraulic revolution motor 65 may be provided to the travel frame 11, and the electric revolution motor 66 may be provided to the vehicle body frame 21. In the revolving drive device 260, the outer ring 61a and the ring-shaped member 263 may be formed integrally as a single member. In the revolving drive device 360, the outer ring 61a may be attached to the travel frame 11, and the inner ring 61b may be attached to the vehicle body frame 21. In this case, the motor which provides revolving-drive force via the external gear 69 would be provided to the vehicle body frame 21, and the motor which provides revolving-drive force via the first internal gear 62 would be provided to the travel frame 11.

In the embodiments described above, the load applied to the hydraulic revolution motor 65 is determined by the amount of increase in a revolution signal, but as another possible example, the load applied to the hydraulic revolution motor 65 may be determined by the discharge oil pressure of the hydraulic pump 42 or the voltage applied to a pump electric motor 454. In the embodiments described above, the revolving bearing was configured from ball bearings, but it may instead be configured from roller bearings or the like. The revolution motors 65, 66 may also be configured from motors whose structures have variable-speed mechanisms.

In the embodiments described above, the hydraulic travel motor 18 may be provided with a regenerative power generator which rotates to regenerate deceleration energy and generate electricity when the hydraulic travel motor 18 transitions from traveling to decelerated traveling. Similarly, the hydraulic revolution motor 65 may be provided with a regenerative power generator which is rotatably driven to regenerate energy for decelerating revolving and to generate electricity during the action of revolving deceleration. Another possible option is to provide a regenerative power generator which generates electricity from the flow of operating oil returning to the operating oil tank from the control valve 43 .

### EXPLANATION OF NUMERALS AND CHARACTERS

- 1: hydraulic shovel (construction machine)
- 10: travel device (traveling body)
- 20: vehicle body (revolving body)
- 60, 160, 260, 360, 460: revolving drive device
- 61: revolving bearing
- 61a: outer ring
- 61b: inner ring
- 62: first internal gear
- 63, 263, 463: ring-shaped member
- 64, 264: second internal gear
- 65: hydraulic revolution motor
- 65a: first pinion
- 66: electric revolution motor
- 66a: second pinion
- 69, 469: external gear
- 163: variable-speed gear train
- 163a: bottom gear
- 163b: top gear

## Claims

1. A construction machine comprising a traveling body (10), a revolving body (20) revolvably mounted on the traveling body and a revolving drive device (60) for revolving the revolving body on the traveling body , the revolving drive device comprising:
a revolving bearing (61) for revolvably supporting the revolving body on the traveling body;
a first revolving gear member mounted on a first one of the body either the traveling body or the revolving body and positioned on the same axis as the revolving bearing;
a second revolving gear member (63) mounted on the first one of the body and positioned on the same axis as the revolving bearing;
a hydraulic motor (65) mounted on a second one of the body on which the first revolving gear is not mounted, the hydraulic motor having a first pinion gear (65a) that meshes with the first revolving gear member, the hydraulic motor being capable of rotatably driving the first pinion gear to rotatably drive the first revolving gear member;
a regenerative electric motor (66) mounted on the second one of the body on which the second revolving gear is not mounted, the regenerative electric motor having a second pinion gear (66a) that meshes with the second revolving gear member, the regenerative electric motor being capable of rotatably driving the second pinion gear to rotatably drive the second revolving gear member, and being capable of regenerative electric power generation by being driven via the second pinion gear by the rotation of the second revolving gear member;
a first reduction ratio at which rotation is transmitted by the first pinion gear to the first revolving gear member being different from a second reduction ratio at which rotation is transmitted by the second pinion gear to the second revolving gear member,
the revolving bearing (61) has an outer ring (61a) attached to one of the traveling body and the revolving body, and an inner ring (61b) provided to an inner side of the outer ring so as to be able to perform relative rotation via rolling elements (61c), the inner ring being attached to another of the traveling body and the revolving body;
the first revolving gear member has a first gear (62) being integrally connected to the inner ring, while the second revolving gear member has a second gear (64) being integrally connected to the inner ring and having a different number of teeth with the first gear;
the hydraulic motor is provided on the body on which the outer ring is mounted, and the first pinion gear meshes with the first gear; and
the regenerative electric motor is provided on the body on which the outer ring is mounted and the second pinion gear meshes with the second gear;
**characterizing in that**;
either one of the first gear and second gear is configured by an internal gear formed in an inner circumferential surface of the inner ring, and another of the first gear and second gear is configured by an internal gear formed in an inner circumferential surface of a ring-shaped member integrally linked to the inner ring.

2. The construction machine according to claim 1, **characterized in that** at least one of the rotation from the first pinion gear to the first revolving gear member and the rotation from the second pinion gear to the second revolving gear member is transmitted via a variable-speed gear train.

3. The construction machine according to claim 1 or 2, **characterized in that** the first revolving gear member and the second revolving gear member are formed integrally having the same number of teeth, and the first pinion gear and the second pinion gear are made to have different numbers of teeth, thereby causing the first and second reduction ratios to be different.

4. The construction machine device according to claim 3, **characterized in that** the first revolving gear member and the second revolving gear member are configured from an internal gear formed in an inner circumferential surface of the inner ring.

5. A construction machine comprising a traveling body (10), a revolving body (20) revolvably mounted on the traveling body and a revolving drive device (260) for revolving the revolving body on the traveling body, the revolving drive device comprising:
a revolving bearing (61) for revolvably supporting the revolving body on the traveling body;
a first revolving gear member mounted on a first one of the body either the traveling body or the revolving body and positioned on the same axis as the revolving bearing;
a second revolving gear member (263) mounted on a second one of the body either the traveling body or the revolving body and positioned on the same axis as the revolving bearing;
a hydraulic motor (65) mounted on the second one of the body on which the first revolving gear is not mounted, the hydraulic motor having a first pinion gear (65a) that meshes with the first revolving gear member, the hydraulic motor being capable of rotatably driving the first pinion gear to rotatably drive the first revolving gear member;
a regenerative electric motor (66) mounted on the first one of the body on which the second revolving gear is not mounted, the regenerative electric motor having a second pinion gear (66a) that meshes with the second revolving gear member, the regenerative electric motor being capable of rotatably driving the second pinion gear to rotatably drive the second revolving gear member, and being capable of regenerative electric power generation by being driven via the second pinion gear by the rotation of the second revolving gear member;
a first reduction ratio at which rotation is transmitted by the first pinion gear to the first revolving gear member being different from a second reduction ratio at which rotation is transmitted by the second pinion gear to the second revolving gear membe;,
the revolving bearing (61) has an outer ring (61a) attached to one of the traveling body and the revolving body, and an inner ring (61b) provided to an inner side of the outer ring so as to be able to perform relative rotation via rolling elements (61c), the inner ring being attached to another of the traveling body and the revolving body;
the first revolving gear member has a first gear (62) provided as being integrally linked to the inner ring, while the second revolving gear member has a second gear (264) provided as being integrally linked to the outer ring and having a different number of teeth than the first gear;
the regenerative electric motor is provided to the side provided with the outer ring and the first pinion gear meshes with the first gear; and
the hydraulic motor is provided to the side provided with the inner ring and the second pinion gear meshes with the second gear.;
**characterizing in that**;
the first gear is configured by an internal gear formed in an inner circumferential surface of the inner ring, and the second gear is configured by an external gear formed in an inner circumferential surface of a ring-shaped member integrally linked to the outer ring.

6. A construction machine comprising a traveling body (10), a revolving body (20) revolvably mounted on the traveling body and a revolving drive device (360) for revolving the revolving body on the traveling body, the revolving drive device comprising:
a revolving bearing (61) for revolvably supporting the revolving body on the traveling body;
a first revolving gear member mounted on a first one of the body either the traveling body or the revolving body and positioned on the same axis as the revolving bearing;
a second revolving gear member mounted on a second one of the body either the traveling body or the revolving body and positioned on the same axis as the revolving bearing;
a hydraulic motor (65) mounted on the second one of the body on which the first revolving gear is not mounted, the hydraulic motor having a first pinion gear (65a) that meshes with the first revolving gear member, the hydraulic motor being capable of rotatably driving the first pinion gear to rotatably drive the first revolving gear member;
a regenerative electric motor (66) mounted on the first one of the body on which the second revolving gear is not mounted, the regenerative electric motor having a second pinion gear (66a) that meshes with the second revolving gear member, the regenerative electric motor being capable of rotatably driving the second pinion gear to rotatably drive the second revolving gear member, and being capable of regenerative electric power generation by being driven via the second pinion gear by the rotation of the second revolving gear member;
a first reduction ratio at which rotation is transmitted by the first pinion gear to the first revolving gear member being different from a second reduction ratio at which rotation is transmitted by the second pinion gear to the second revolving gear membe;,
the revolving bearing (61) has an outer ring (61a) attached to one of the traveling body and the revolving body, and an inner ring (61b) provided to an inner side of the outer ring so as to be able to perform relative rotation via rolling elements (61c), the inner ring being attached to another of the traveling body and the revolving body;
the first revolving gear member has a first gear (69) provided as being integrally linked to the outer ring, while the second revolving gear member has a second gear (62) provided as being integrally linked to the inner ring and having a different number of teeth than the first gear;
the regenerative electric motor is provided to the side provided with the inner ring and the first pinion gear meshes with the first gear; and
the hydraulic motor is provided to the side provided with the outer ring and the second pinion gear meshes with the second gear;
**characterizing in that**;
the first gear is configured by an external gear formed in an outer circumferential surface of the outer ring, and the second gear is configured by an internal gear formed in an inner circumferential surface of the inner ring.

7. A construction machine comprising a traveling body (10), a revolving body (20) revolvably mounted on the traveling body and a revolving drive device (460) for revolving the revolving body on the traveling body, the revolving drive device comprising:
a revolving bearing (61) for revolvably supporting the revolving body on the traveling body;
a first revolving gear member mounted on a first one of the body either the traveling body or the revolving body and positioned on the same axis as the revolving bearing;
a second revolving gear (463) member mounted on the first one of the body either the traveling body or the revolving body and positioned on the same axis as the revolving bearing;
a hydraulic motor (65) mounted on a second one of the body on which the first revolving gear is not mounted, the hydraulic motor having a first pinion gear (65a) that meshes with the first revolving gear member, the hydraulic motor being capable of rotatably driving the first pinion gear to rotatably drive the first revolving gear member;
a regenerative electric motor (66) mounted on the second one of the body on which the second revolving gear is not mounted, the regenerative electric motor having a second pinion gear (66a) that meshes with the second revolving gear member, the regenerative electric motor being capable of rotatably driving the second pinion gear to rotatably drive the second revolving gear member, and being capable of regenerative electric power generation by being driven via the second pinion gear by the rotation of the second revolving gear member;
a first reduction ratio at which rotation is transmitted by the first pinion gear to the first revolving gear member being different from a second reduction ratio at which rotation is transmitted by the second pinion gear to the second revolving gear membe;,
the revolving bearing (61) has an outer ring (61a) attached to one of the traveling body and the revolving body, and an inner ring (61b) provided to an inner side of the outer ring so as to be able to perform relative rotation via rolling elements (61c), the inner ring being attached to another of the traveling body and the revolving body;
the first revolving gear member has a first gear (62) provided as being integrally linked to the inner ring, while the second revolving gear member has a second gear (469) provided as being integrally linked to the inner ring and having a different number of teeth than the first gear;
the hydraulic motor is provided to the side provided with the outer ring and the first pinion gear meshes with the first gear; and
the regenerative electric motor is provided to the side provided with the outer ring and the second pinion gear meshes with the second gear; and
**characterizing in that**;
either one of the first gear or second gear is configured by an external gear formed in an inner circumferential surface of the inner ring, and another one of the first gear or second gear is configured by an outer gear formed in an outer circumferential surface of a member integrally linked to the inner ring.

8. The revolving drive device according to any of claims 1 through 7, **characterized by** a controller for controlling operating oil supplied to the hydraulic revolution motor and electric power supplied to the electric revolution motor and for performing drive control on the hydraulic revolution motor and the electric revolution motor; wherein
the controller drives both the hydraulic revolution motor and the electric revolution motor according to the load applied to the hydraulic revolution motor.

9. The revolving drive device according to claim 8, **characterized in that** when the controller drives both the hydraulic revolution motor and the electric revolution motor to accelerate revolution, the controller performs a control for increasing the operating oil supplied to the hydraulic revolution motor and reduces the electric power supplied to the electric revolution motor, and when a predetermined revolving rate is reached, the controller stops the supply of electric power to the electric revolution motor and drives only the hydraulic revolution motor.

## Patentansprüche

1. Baumaschine, umfassend eine fahrende Struktur (10), eine drehende Struktur (20), die drehbar an der fahrenden Struktur montiert ist, und eine drehende Antriebsvorrichtung (60) zum Drehen der drehenden Struktur auf der fahrenden Struktur, wobei die drehende Antriebsvorrichtung Folgendes umfasst:
ein drehendes Lager (61) zum drehbaren Stützen der drehenden Struktur auf der fahrenden Struktur;
ein erstes drehendes Zahnradelement, das auf einer ersten Struktur, entweder auf der fahrenden Struktur oder der drehenden Struktur, montiert und auf derselben Achse wie das drehende Lager positioniert ist;
ein zweites drehendes Zahnradelement (63), das auf der ersten Struktur montiert und auf derselben Achse wie das drehende Lager positioniert ist;
einen Hydraulikmotor (65), der auf einer zweiten Struktur montiert ist, auf der das erste drehende Zahnrad nicht montiert ist, wobei der Hydraulikmotor ein erstes Ritzel (65a) aufweist, das in das erste drehende Zahnradelement eingreift, wobei der Hydraulikmotor in der Lage ist, das erste Ritzel drehbar anzutreiben, um das erste drehende Zahnradelement drehbar anzutreiben;
einen regenerativen Elektromotor (66), der an der zweiten Struktur montiert ist, an welcher das zweite drehende Zahnrad nicht montiert ist, wobei der regenerative Elektromotor ein zweites Ritzel (66a) aufweist, das in das zweite drehende Zahnradelement eingreift, wobei der regenerative Elektromotor in der Lage ist, das zweite Ritzel drehbar anzutreiben, um das zweite drehende Zahnradelement drehbar anzutreiben, und in der Lage ist, regenerative elektrische Energie zu erzeugen, indem er durch die Drehung des zweiten drehenden Zahnradelements über das zweite Ritzel angetrieben wird;
ein erstes Untersetzungsverhältnis, mit dem Drehung von dem ersten Ritzel auf das erste drehende Zahnradelement übertragen wird, das sich von einem zweiten Untersetzungsverhältnis unterscheidet, mit dem Drehung von dem zweiten Ritzel auf das zweite drehende Zahnradelement übertragen wird,
wobei das drehende Lager (61) einen äußeren Ring (61a) aufweist, der an der fahrenden Struktur oder der drehenden Struktur angebracht ist, und einen inneren Ring (61b), der an einer inneren Seite des äußeren Rings bereitgestellt ist, sodass er in der Lage ist, über rollende Elemente (61c) eine relative Drehung auszuführen, wobei der innere Ring an der jeweils anderen von fahrender Struktur und drehender Struktur angebracht ist;
wobei das erste drehende Zahnradelement ein erstes Zahnrad (62) aufweist, das integral mit dem inneren Ring verbunden ist, während das zweite drehende Zahnradelement ein zweites Zahnrad (64) aufweist, das integral mit dem inneren Ring verbunden ist und eine von dem ersten Zahnrad verschiedene Anzahl von Zähnen aufweist;
wobei der Hydraulikmotor an der Struktur bereitgestellt ist, an welcher der äußere Ring montiert ist, und das erste Ritzel in das erste Zahnrad eingreift; und
wobei der regenerative Elektromotor an der Struktur bereitgestellt ist, an welcher der äußere Ring montiert ist, und das zweite Ritzel in das zweite Zahnrad eingreift;
**dadurch gekennzeichnet, dass**:
entweder das erste Zahnrad oder das zweite Zahnrad durch ein Zahnrad mit Innenverzahnung dargestellt wird, das in einer inneren Umfangsoberfläche des inneren Rings ausgebildet ist, und das andere von erstem Zahnrad und zweitem Zahnrad durch ein Zahnrad mit Innenverzahnung dargestellt wird, das in einer inneren Umfangsoberfläche eines ringförmigen Elements ausgebildet ist, das mit dem inneren Ring integral verbunden ist.

2. Baumaschine nach Anspruch 1, dadurch gekenn-zeichnet, dass die Drehung von dem ersten Ritzel zu dem ersten drehenden Zahnradelement und/oder die Drehung von dem zweiten Ritzel zu dem zweiten drehenden Zahnradelement über einen Getriebezug mit variabler Drehzahl übertragen wird.

3. Baumaschine nach Anspruch 1 oder 2, **dadurch gekennzeichnet, dass** das erste drehende Zahnradelement und das zweite drehende Zahnradelement integral ausgebildet sind und dieselbe Anzahl an Zähnen aufweisen, und das erste Ritzel und das zweite Ritzel so hergestellt sind, dass sie jeweils eine unterschiedliche Anzahl von Zähnen aufweisen und dadurch verursachen, dass das erste und das zweite Untersetzungsverhältnis unterschiedlich sind.

4. Baumaschinenvorrichtung nach Anspruch 3, **dadurch gekennzeichnet, dass** das erste drehende Zahnradelement und das zweite drehende Zahnradelement von einem Zahnrad mit Innenverzahnung dargestellt werden, das in einer inneren Umfangsoberfläche des inneren Rings ausgebildet ist.

5. Baumaschine, die eine fahrende Struktur (10), eine drehende Struktur (20), die drehbar an der fahrenden Struktur montiert ist, und eine drehende Antriebsvorrichtung (260) zum Drehen der drehenden Struktur an der fahrenden Struktur umfasst, wobei die drehende Antriebsvorrichtung Folgendes umfasst:
ein drehendes Lager (61) zum drehbaren Stützen der drehenden Struktur auf der fahrenden Struktur;
ein erstes drehendes Zahnradelement, das an einer ersten Struktur, entweder der fahrenden Struktur oder der drehenden Struktur, montiert und auf derselben Achse wie das drehende Lager positioniert ist;
ein zweites drehendes Zahnradelement (263), das an einer zweiten Struktur, entweder der fahrenden Struktur oder der drehenden Struktur, montiert und auf derselben Achse wie das drehende Lager positioniert ist;
einen Hydraulikmotor (65), der an der zweiten Struktur montiert ist, an der das erste drehende Zahnrad nicht montiert ist, wobei der Hydraulikmotor ein erstes Ritzel (65a) aufweist, das in das erste drehende Zahnradelement eingreift, wobei der Hydraulikmotor in der Lage ist, das erste Ritzel drehbar anzutreiben, um das erste drehende Zahnradelement drehbar anzutreiben;
einen regenerativen Elektromotor (66), der an der ersten Struktur montiert ist, an der das zweite drehende Zahnrad nicht montiert ist, wobei der regenerative Elektromotor ein zweites Ritzel (66a) aufweist, das in das zweite drehende Zahnradelement eingreift, wobei der regenerative Elektromotor in der Lage ist, das zweite Ritzel drehbar anzutreiben, um das zweite drehende Zahnradelement drehbar anzutreiben, und in der Lage ist, regenerative elektrische Energie zu erzeugen, indem er durch die Drehung des zweiten drehenden Zahnradelements über das zweite Ritzel angetrieben wird;
ein erstes Untersetzungsverhältnis, mit dem Drehung von dem ersten Ritzel auf das erste drehende Zahnradelement übertragen wird, das sich von einem zweiten Untersetzungsverhältnis unterscheidet, mit dem Drehung von dem zweiten Ritzel auf das zweite drehende Zahnradelement übertragen wird,
wobei das drehende Lager (61) einen äußeren Ring (61a) aufweist, der an der fahrenden Struktur oder der drehenden Struktur angebracht ist, und einen inneren Ring (61b), der an einer inneren Seite des äußeren Rings bereitgestellt ist, sodass er in der Lage ist, über rollende Elemente (61c) eine relative Drehung auszuführen, wobei der innere Ring an der jeweils anderen von fahrender Struktur und drehender Struktur angebracht ist;
wobei das erste drehende Zahnradelement ein erstes Zahnrad (62) aufweist, das als integral mit dem inneren Ring verbunden bereitgestellt ist, während das zweite drehende Zahnradelement ein zweites Zahnrad (264) aufweist, das als integral mit dem äußeren Ring verbunden bereitgestellt ist und eine von dem ersten Zahnrad verschiedene Anzahl von Zähnen aufweist;
wobei der regenerative Elektromotor auf der Seite bereitgestellt ist, die mit dem äußeren Ring versehen ist, und das erste Ritzel in das erste Zahnrad eingreift; und
wobei der Hydraulikmotor auf der Seite bereitgestellt ist, die mit dem inneren Ring versehen ist, und das zweite Ritzel in das zweite Zahnrad eingreift;
**dadurch gekennzeichnet, dass**:
das erste Zahnrad durch ein Zahnrad mit Innenverzahnung dargestellt wird, das in einer inneren Umfangsoberfläche des inneren Rings ausgebildet ist, und das zweite Zahnrad durch ein Zahnrad mit Außenverzahnung dargestellt wird, das in einer inneren Umfangsoberfläche eines ringförmigen Elements ausgebildet ist, das mit dem äußeren Ring integral verbunden ist.

6. Baumaschine, die eine fahrende Struktur (10), eine drehende Struktur (20), die drehbar an der fahrenden Struktur montiert ist, und eine drehende Antriebsvorrichtung (360) zum Drehen der drehenden Struktur an der fahrenden Struktur umfasst, wobei die drehende Antriebsvorrichtung Folgendes umfasst:
ein drehendes Lager (61) zum drehbaren Stützen der drehenden Struktur auf der fahrenden Struktur;
ein erstes drehendes Zahnradelement, das an einer ersten Struktur, entweder der fahrenden Struktur oder der drehenden Struktur, montiert und auf derselben Achse wie das drehende Lager positioniert ist;
ein zweites drehendes Zahnradelement, das an einer zweiten Struktur, entweder der fahrenden Struktur oder der drehenden Struktur, montiert und auf derselben Achse wie das drehende Lager positioniert ist;
einen Hydraulikmotor (65), der an der zweiten Struktur montiert ist, an der das erste drehende Zahnrad nicht montiert ist, wobei der Hydraulikmotor ein erstes Ritzel (65a) aufweist, das in das erste drehende Zahnradelement eingreift, wobei der Hydraulikmotor in der Lage ist, das erste Ritzel drehbar anzutreiben, um das erste drehende Zahnradelement drehbar anzutreiben;
einen regenerativen Elektromotor (66), der an der ersten Struktur montiert ist, an der das zweite drehende Zahnrad nicht montiert ist, wobei der regenerative Elektromotor ein zweites Ritzel (66a) aufweist, das in das zweite drehende Zahnradelement eingreift, wobei der regenerative Elektromotor in der Lage ist, das zweite Ritzel drehbar anzutreiben, um das zweite drehende Zahnradelement drehbar anzutreiben, und in der Lage ist, regenerative elektrische Energie zu erzeugen, indem er durch die Drehung des zweiten drehenden Zahnradelements über das zweite Ritzel angetrieben wird;
ein erstes Untersetzungsverhältnis, mit dem Drehung von dem ersten Ritzel auf das erste drehende Zahnradelement übertragen wird, das sich von einem zweiten Untersetzungsverhältnis unterscheidet, mit dem Drehung von dem zweiten Ritzel auf das zweite drehende Zahnradelement übertragen wird,
wobei das drehende Lager (61) einen äußeren Ring (61a) aufweist, der an der fahrenden Struktur oder der drehenden Struktur angebracht ist, und einen inneren Ring (61b), der an einer inneren Seite des äußeren Rings bereitgestellt ist, sodass er in der Lage ist, über rollende Elemente (61c) eine relative Drehung auszuführen, wobei der innere Ring an der jeweils anderen von fahrender Struktur und drehender Struktur angebracht ist;
wobei das erste drehende Zahnradelement ein erstes Zahnrad (69) aufweist, das als integral mit dem äußeren Ring verbunden bereitgestellt ist, während das zweite drehende Zahnradelement ein zweites Zahnrad (62) aufweist, das als integral mit dem inneren Ring verbunden bereitgestellt ist und eine von dem ersten Zahnrad verschiedene Anzahl von Zähnen aufweist;
wobei der regenerative Elektromotor auf der Seite bereitgestellt ist, die mit dem inneren Ring versehen ist, und das erste Ritzel in das erste Zahnrad eingreift; und
wobei der Hydraulikmotor auf der Seite bereitgestellt ist, die mit dem äußeren Ring versehen ist, und das zweite Ritzel in das zweite Zahnrad eingreift;
**dadurch gekennzeichnet, dass**:
das erste Zahnrad durch ein Zahnrad mit Außenverzahnung dargestellt wird, das in einer äußeren Umfangsoberfläche des äußeren Rings ausgebildet ist, und das zweite Zahnrad durch ein Zahnrad mit Innenverzahnung dargestellt wird, das in einer inneren Umfangsoberfläche des inneren Rings ausgebildet ist.

7. Baumaschine, die eine fahrende Struktur (10), eine drehende Struktur (20), die drehbar an der fahrenden Struktur montiert ist, und eine drehende Antriebsvorrichtung (460) zum Drehen der drehenden Struktur an der fahrenden Struktur umfasst, wobei die drehende Antriebsvorrichtung Folgendes umfasst:
ein drehendes Lager (61) zum drehbaren Stützen der drehenden Struktur auf der fahrenden Struktur;
ein erstes drehendes Zahnradelement, das an einer ersten Struktur, entweder der fahrenden Struktur oder der drehenden Struktur, montiert und auf derselben Achse wie das drehende Lager positioniert ist;
ein zweites drehendes Zahnradelement (463), das an der ersten Struktur, entweder der fahrenden Struktur oder der drehenden Struktur, montiert und auf derselben Achse wie das drehende Lager positioniert ist;
einen Hydraulikmotor (65), der an einer zweiten Struktur montiert ist, an der das erste drehende Zahnrad nicht montiert ist, wobei der Hydraulikmotor ein erstes Ritzel (65a) aufweist, das in das erste drehende Zahnradelement eingreift, wobei der Hydraulikmotor in der Lage ist, das erste Ritzel drehbar anzutreiben, um das erste drehende Zahnradelement drehbar anzutreiben;
einen regenerativen Elektromotor (66), der an der zweiten Struktur montiert ist, an der das zweite drehende Zahnrad nicht montiert ist, wobei der regenerative Elektromotor ein zweites Ritzel (66a) aufweist, das in das zweite drehende Zahnradelement eingreift, wobei der regenerative Elektromotor in der Lage ist, das zweite Ritzel drehbar anzutreiben, um das zweite drehende Zahnradelement drehbar anzutreiben, und in der Lage ist, regenerative elektrische Energie zu erzeugen, indem er durch die Drehung des zweiten drehenden Zahnradelements über das zweite Ritzel angetrieben wird;
ein erstes Untersetzungsverhältnis, mit dem Drehung von dem ersten Ritzel auf das erste drehende Zahnradelement übertragen wird, das sich von einem zweiten Untersetzungsverhältnis unterscheidet, mit dem Drehung von dem zweiten Ritzel auf das zweite drehende Zahnradelement übertragen wird,
wobei das drehende Lager (61) einen äußeren Ring (61a) aufweist, der an der fahrenden Struktur oder der drehenden Struktur angebracht ist, und einen inneren Ring (61b), der an einer inneren Seite des äußeren Rings bereitgestellt ist, sodass er in der Lage ist, über rollende Elemente (61c) eine relative Drehung auszuführen, wobei der innere Ring an der jeweils anderen von fahrender Struktur und drehender Struktur angebracht ist;
wobei das erste drehende Zahnradelement ein erstes Zahnrad (62) aufweist, das als integral mit dem inneren Ring verbunden bereitgestellt ist, während das zweite drehende Zahnradelement ein zweites Zahnrad (469) aufweist, das als integral mit dem inneren Ring verbunden bereitgestellt ist und eine von dem ersten Zahnrad verschiedene Anzahl von Zähnen aufweist;
wobei der Hydraulikmotor auf der Seite bereitgestellt ist, die mit dem äußeren Ring versehen ist, und das erste Ritzel in das erste Zahnrad eingreift; und
wobei der regenerative Elektromotor auf der Seite bereitgestellt ist, die mit dem äußeren Ring versehen ist, und das zweite Ritzel in das zweite Zahnrad eingreift; und
**dadurch gekennzeichnet, dass**:
das erste Zahnrad oder das zweite Zahnrad durch ein Zahnrad mit Außenverzahnung dargestellt wird, das in einer inneren Umfangsoberfläche des inneren Rings ausgebildet ist, und das andere von erstem Zahnrad und zweitem Zahnrad durch ein Zahnrad mit Außenverzahnung dargestellt wird, das in einer äußeren Umfangsoberfläche eines Elements ausgebildet ist, das mit dem inneren Ring integral verbunden ist.

8. Drehende Antriebsvorrichtung nach einem der Ansprüche 1 bis 7, **gekennzeichnet durch** eine Steuerung zum Steuern von Betriebsöl, das an den Hydraulikdrehmotor geliefert wird, und von elektrischer Energie, die an den Elektrodrehmotor geliefert wird, und zum Ausführen von Antriebssteuerung an dem Hydraulikdrehmotor und dem Elektrodrehmotor; wobei
die Steuerung den Hydraulikdrehmotor und den Elektrodrehmotor entsprechend der Last antreibt, die auf den Hydraulikdrehmotor angewendet wird.

9. Drehende Antriebsvorrichtung nach Anspruch 8, **dadurch gekennzeichnet, dass** dann, wenn die Steuerung sowohl den Hydraulikdrehmotor als auch den Elektrodrehmotor antreibt, um die Drehzahl zu beschleunigen, die Steuerung eine Steuerung zum Erhöhen der Betriebsölmenge ausführt, die an den Hydraulikdrehmotor geliefert wird, und die Elektroenergie reduziert, die an den Elektrodrehmotor geliefert wird, und dann, wenn eine vorbestimmte Drehzahl erreicht ist, die Steuerung die Lieferung von elektrischer Energie an den Elektrodrehmotor stoppt und nur den Hydraulikdrehmotor antreibt.

## Revendications

1. Engin de construction comprenant un corps déplaçable (10), un corps rotatif (20) monté de manière rotative sur le corps déplaçable et un dispositif d'entraînement en rotation (60) pour faire tourner le corps rotatif sur le corps déplaçable, le dispositif d'entraînement en rotation comprenant :
un palier rotatif (61) destiné à supporter de manière rotative le corps rotatif sur le corps déplaçable ;
un premier organe d'engrenage rotatif monté sur un premier des corps, soit le corps déplaçable soit le corps rotatif et positionné sur le même axe que le palier rotatif ;
un deuxième organe d'engrenage rotatif (63) monté sur le premier des corps et positionné sur le même axe que le palier rotatif ;
un moteur hydraulique (65) monté sur un deuxième des corps, sur lequel n'est pas monté le premier engrenage rotatif, le moteur hydraulique ayant un premier pignon d'engrenage (65a) qui s'engrène avec le premier organe d'engrenage rotatif, le moteur hydraulique étant apte à entraîner en rotation le premier pignon d'engrenage de manière à entraîner en rotation le premier organe d'engrenage rotatif ;
un moteur électrique régénératif (66) monté sur le deuxième des corps, sur lequel n'est pas monté le deuxième engrenage rotatif, le moteur électrique régénératif ayant un deuxième pignon d'engrenage (66a) qui s'engrène avec le deuxième organe d'engrenage rotatif, le moteur électrique régénératif étant apte à entraîner en rotation le deuxième pignon d'engrenage de manière à entraîner en rotation le deuxième organe d'engrenage rotatif, et étant apte à générer de la puissance électrique régénératrice par le fait qu'il est entraîné par le biais du deuxième pignon d'engrenage par la rotation du deuxième organe d'engrenage rotatif ;
un premier rapport de réduction auquel une rotation est transmise par le premier pignon d'engrenage au premier organe d'engrenage rotatif étant différent d'un deuxième rapport de réduction auquel une rotation est transmise par le deuxième pignon d'engrenage au deuxième organe d'engrenage rotatif,
le palier rotatif (61) présentant une bague externe (61a) attachée à l'un parmi le corps déplaçable et le corps rotatif, et une bague interne (61b) prévue sur un côté interne de la bague externe de manière à pouvoir effectuer une rotation relative par le biais d'éléments de roulement (61c), la bague interne étant attachée à un autre parmi le corps déplaçable et le corps rotatif ;
le premier organe d'engrenage rotatif ayant un premier engrenage (62) relié intégralement à la bague interne, tandis que le deuxième organe d'engrenage rotatif a un deuxième engrenage (64) relié intégralement à la bague interne et ayant un nombre de dents différent de celui du premier engrenage ;
le moteur hydraulique étant prévu sur le corps sur lequel est montée la bague externe, le premier pignon d'engrenage s'engrenant avec le premier engrenage ; et
le moteur électrique régénératif étant prévu sur le corps sur lequel est montée la bague externe et le deuxième pignon d'engrenage s'engrenant avec le deuxième engrenage ;
**caractérisé en ce que**
l'un ou l'autre parmi le premier engrenage et le deuxième engrenage est configuré par un engrenage interne formé dans une surface circonférentielle interne de la bague interne, et un autre parmi le premier engrenage et le deuxième engrenage est configuré par un engrenage interne formé dans une surface circonférentielle interne d'un organe de forme annulaire relié intégralement à la bague interne.

2. Engin de construction selon la revendication 1, **caractérisé en ce qu'**au moins l'une parmi la rotation du premier pignon d'engrenage par rapport au premier organe d'engrenage rotatif et la rotation du deuxième pignon d'engrenage par rapport au deuxième organe d'engrenage rotatif est transmise par le biais d'un train d'engrenages à vitesse variable.

3. Engin de construction selon la revendication 1 ou 2, **caractérisé en ce que** le premier organe d'engrenage rotatif et le deuxième organe d'engrenage rotatif sont formés intégralement et présentent le même nombre de dents, et le premier pignon d'engrenage et le deuxième pignon d'engrenage ont des nombres de dents différents, de sorte que le premier et le deuxième rapport de réduction sont différents.

4. Engin de construction selon la revendication 3, **caractérisé en ce que** le premier organe d'engrenage rotatif et le deuxième organe d'engrenage rotatif sont configurés à partir d'un engrenage interne formé dans une surface circonférentielle interne de la bague interne.

5. Engin de construction comprenant un corps déplaçable (10), un corps rotatif (20) monté de manière rotative sur le corps déplaçable et un dispositif d'entraînement en rotation (260) pour faire tourner le corps rotatif sur le corps déplaçable, le dispositif d'entraînement en rotation comprenant :
un palier rotatif (61) pour supporter de manière rotative le corps rotatif sur le corps déplaçable ;
un premier organe d'engrenage rotatif monté sur un premier des corps, soit le corps déplaçable, soit le corps rotatif, et positionné sur le même axe que le palier rotatif ;
un deuxième organe d'engrenage rotatif (263) monté sur un deuxième des corps, soit le corps déplaçable soit le corps rotatif et positionné sur le même axe que le palier rotatif ;
un moteur hydraulique (65) monté sur le deuxième des corps, sur lequel n'est pas monté le premier engrenage rotatif, le moteur hydraulique ayant un premier pignon d'engrenage (65a) qui s'engrène avec le premier organe d'engrenage rotatif, le moteur hydraulique étant apte à entraîner en rotation le premier pignon d'engrenage de manière à entraîner en rotation le premier organe d'engrenage rotatif ;
un moteur électrique régénératif (66) monté sur le premier des corps, sur lequel n'est pas monté le deuxième engrenage rotatif, le moteur électrique régénératif ayant un deuxième pignon d'engrenage (66a) qui s'engrène avec le deuxième organe d'engrenage rotatif, le moteur électrique régénératif étant apte à entraîner en rotation le deuxième pignon d'engrenage de manière à entraîner en rotation le deuxième organe d'engrenage rotatif, et étant apte à générer de la puissance électrique régénératrice par le fait qu'il est entraîné par le biais du deuxième pignon d'engrenage par la rotation du deuxième organe d'engrenage rotatif ;
un premier rapport de réduction auquel une rotation est transmise par le premier pignon d'engrenage au premier organe d'engrenage rotatif étant différent d'un deuxième rapport de réduction auquel une rotation est transmise par le deuxième pignon d'engrenage au deuxième organe d'engrenage rotatif,
le palier rotatif (61) présentant une bague externe (61a) attachée à l'un parmi le corps déplaçable et le corps rotatif, et une bague interne (61b) prévue sur un côté interne de la bague externe de manière à pouvoir effectuer une rotation relative par le biais d'éléments de roulement (61c), la bague interne étant attachée à un autre parmi le corps déplaçable et le corps rotatif ;
le premier organe d'engrenage rotatif ayant un premier engrenage (62) prévu de manière à être relié intégralement à la bague interne, tandis que le deuxième organe d'engrenage rotatif a un deuxième engrenage (264) prévu de manière à être relié intégralement à la bague externe et ayant un nombre de dents différent de celui du premier engrenage ;
le moteur électrique régénératif étant prévu sur le côté pourvu de la bague externe et le premier pignon d'engrenage s'engrenant avec le premier engrenage ; et
le moteur hydraulique étant prévu sur le côté pourvu de la bague interne et le deuxième pignon d'engrenage s'engrenant avec le deuxième engrenage ;
**caractérisé en ce que**
le premier engrenage est configuré par un engrenage interne formé dans une surface circonférentielle interne de la bague interne, et le deuxième engrenage est configuré par un engrenage externe formé dans une surface circonférentielle interne d'un organe de forme annulaire relié intégralement à la bague externe.

6. Engin de construction comprenant un corps déplaçable (10), un corps rotatif (22) monté de manière rotative sur le corps déplaçable et un dispositif d'entraînement en rotation (360) pour faire tourner le corps rotatif sur le corps déplaçable, le dispositif d'entraînement en rotation comprenant :
un palier rotatif (61) destiné à supporter de manière rotative le corps rotatif sur le corps déplaçable ;
un premier organe d'engrenage rotatif monté sur un premier des corps, soit le corps déplaçable soit le corps rotatif et positionné sur le même axe que le palier rotatif ;
un deuxième organe d'engrenage rotatif monté sur un deuxième des corps, soit le corps déplaçable soit le corps rotatif et positionné sur le même axe que le palier rotatif ;
un moteur hydraulique (65) monté sur le deuxième des corps, sur lequel n'est pas monté le premier engrenage rotatif, le moteur hydraulique ayant un premier pignon d'engrenage (65a) qui s'engrène avec le premier organe d'engrenage rotatif, le moteur hydraulique étant apte à entraîner en rotation le premier pignon d'engrenage de manière à entraîner en rotation le premier organe d'engrenage rotatif ;
un moteur électrique régénératif (66) monté sur le premier des corps, sur lequel n'est pas monté le deuxième engrenage rotatif, le moteur électrique régénératif ayant un deuxième pignon d'engrenage (66a) qui s'engrène avec le deuxième organe d'engrenage rotatif, le moteur électrique régénératif étant apte à entraîner en rotation le deuxième pignon d'engrenage de manière à entraîner en rotation le deuxième organe d'engrenage rotatif, et étant apte à générer de la puissance électrique régénératrice par le fait qu'il est entraîné par le biais du deuxième pignon d'engrenage par la rotation du deuxième organe d'engrenage rotatif ;
un premier rapport de réduction auquel une rotation est transmise par le premier pignon d'engrenage au premier organe d'engrenage rotatif étant différent d'un deuxième rapport de réduction auquel une rotation est transmise par le deuxième pignon d'engrenage au deuxième organe d'engrenage rotatif,
le palier rotatif (61) présentant une bague externe (61a) attachée à l'un parmi le corps déplaçable et le corps rotatif, et une bague interne (61b) prévue sur un côté interne de la bague externe de manière à pouvoir effectuer une rotation relative par le biais d'éléments de roulement (61c), la bague interne étant attachée à un autre parmi le corps déplaçable et le corps rotatif ;
le premier organe d'engrenage rotatif ayant un premier engrenage (69) prévu de manière à être relié intégralement à la bague externe, tandis que le deuxième organe d'engrenage rotatif a un deuxième engrenage (62) prévu de manière à être relié intégralement à la bague interne et ayant un nombre de dents différent de celui du premier engrenage ;
le moteur électrique régénératif étant prévu sur le côté pourvu de la bague interne et le premier pignon d'engrenage s'engrenant avec le premier engrenage ; et
le moteur hydraulique étant prévu sur le côté pourvu de la bague externe et le deuxième pignon d'engrenage s'engrenant avec le deuxième engrenage ;
**caractérisé en ce que**
le premier engrenage est configuré par un engrenage externe formé dans une surface circonférentielle externe de la bague externe, et le deuxième engrenage est configuré par un engrenage interne formé dans une surface conférentielle interne de la bague interne.

7. Engin de construction comprenant un corps déplaçable (10), un corps rotatif (20) monté de manière rotative sur le corps déplaçable et un dispositif d'entraînement en rotation (460) pour faire tourner le corps rotatif sur le corps déplaçable, le dispositif d'entraînement en rotation comprenant :
un palier rotatif (61) destiné à supporter de manière rotative le corps rotatif sur le corps déplaçable ;
un premier organe d'engrenage rotatif monté sur un premier des corps, soit le corps déplaçable soit le corps rotatif et positionné sur le même axe que le palier rotatif ;
un deuxième organe d'engrenage rotatif (463) monté sur le premier des corps, soit le corps déplaçable soit le corps rotatif et positionné sur le même axe que le palier rotatif ;
un moteur hydraulique (65) monté sur un deuxième des corps, sur lequel n'est pas monté le premier engrenage rotatif, le moteur hydraulique ayant un premier pignon d'engrenage (65a) qui s'engrène avec le premier organe d'engrenage rotatif, le moteur hydraulique étant apte à entraîner en rotation le premier pignon d'engrenage de manière à entraîner en rotation le premier organe d'engrenage rotatif ;
un moteur électrique régénératif (66) monté sur le deuxième des corps, sur lequel n'est pas monté le deuxième engrenage rotatif, le moteur électrique régénératif ayant un deuxième pignon d'engrenage (66a) qui s'engrène avec le deuxième organe d'engrenage rotatif, le moteur électrique régénératif étant apte à entraîner en rotation le deuxième pignon d'engrenage de manière à entraîner en rotation le deuxième organe d'engrenage rotatif, et étant apte à générer de la puissance électrique régénératrice par le fait qu'il est entraîné par le biais du deuxième pignon d'engrenage par la rotation du deuxième organe d'engrenage rotatif ;
un premier rapport de réduction auquel une rotation est transmise par le premier pignon d'engrenage au premier organe d'engrenage rotatif étant différent d'un deuxième rapport de réduction auquel une rotation est transmise par le deuxième pignon d'engrenage au deuxième organe d'engrenage rotatif,
le palier rotatif (61) présentant une bague externe (61a) attachée à l'un parmi le corps déplaçable et le corps rotatif, et une bague interne (61b) prévue sur un côté interne de la bague externe de manière à pouvoir effectuer une rotation relative par le biais d'éléments de roulement (61c), la bague interne étant attachée à un autre parmi le corps déplaçable et le corps rotatif ;
le premier organe d'engrenage rotatif ayant un premier engrenage (62) prévu de manière à être relié intégralement à la bague interne, tandis que le deuxième organe d'engrenage rotatif a un deuxième engrenage (469) prévu de manière à être relié intégralement à la bague interne et ayant un nombre de dents différent de celui du premier engrenage ;
le moteur hydraulique étant prévu sur le côté pourvu de la bague externe et le premier pignon d'engrenage s'engrenant avec le premier engrenage ; et
le moteur électrique régénératif étant prévu sur le côté pourvu de la bague externe et le deuxième pignon d'engrenage s'engrenant avec le deuxième engrenage ; et
**caractérisé en ce que**
l'un ou l'autre parmi le premier engrenage et le deuxième engrenage est configuré par un engrenage externe formé dans une surface circonférentielle interne de la bague interne, et un autre parmi le premier engrenage et le deuxième engrenage est configuré par un engrenage externe formé dans une surface circonférentielle externe d'un organe relié intégralement à la bague interne.

8. Dispositif d'entraînement en rotation selon l'une quelconque des revendications 1 à 7, **caractérisé par** un dispositif de commande pour commander l'huile de fonctionnement fournie au moteur rotatif hydraulique et la puissance électrique fournie au moteur rotatif électrique et pour effectuer une commande d'entraînement sur le moteur rotatif hydraulique et le moteur rotatif électrique ;
le dispositif de commande entraînant à la fois le moteur rotatif hydraulique et le moteur rotatif électrique en fonction de la charge appliquée au moteur rotatif hydraulique.

9. Dispositif d'entraînement en rotation selon la revendication 8, **caractérisé en ce que**, lorsque le dispositif de commande entraîne la fois le moteur rotatif hydraulique et le moteur rotatif électrique pour accélérer la rotation, le dispositif de commande effectue une commande pour augmenter la quantité d'huile de fonctionnement fournie au moteur rotatif hydraulique et réduit la puissance électrique fournie au moteur rotatif électrique, et lorsqu'une vitesse de rotation prédéterminée est atteinte, le dispositif de commande interrompt l'alimentation en puissance électrique au moteur rotatif électrique et entraîne seulement le moteur rotatif hydraulique.
